# EUROPÄISCHE PATENTSCHRIFT

(11) **EP 2 483 343 B1**
(45) Veröffentlichungstag und Bekanntmachung des Hinweises auf die Patenterteilung: **23.10.2013**
(21) Anmeldenummer: 10759817.9
(22) Anmeldetag: 17.09.2010
(51) Int. Cl.: C08K 5/49, C08K 5/50, C08K 5/526, C08K 5/5397

(54) **POLYCARBONATZUSAMMENSETZUNGEN MIT VERBESSERTEN OPTISCHEN EIGENSCHAFTEN**
POLYCARBONATE COMPOSITIONS HAVING IMPROVED OPTICAL PROPERTIES
COMPOSITIONS DE POLYCARBONATE AUX PROPRIÉTÉS OPTIQUES AMÉLIORÉES

(30) Priorität: 30.09.2009 DE 102009043513
(43) Veröffentlichungstag der Anmeldung: 08.08.2012
(73) Patentinhaber: Bayer Intellectual Property GmbH, 40789 Monheim (DE)
(72) Erfinder: WEHRMANN, Rolf, 47800 Krefeld (DE); HEUER, Helmut-Werner, 51371 Leverkusen (DE); BOUMANS, Anke, 47574 Goch (DE)
(74) Vertreter: BIP Patents
(86) Internationale Anmeldenummer: PCT/EP2010/005724
(87) Internationale Veröffentlichungsnummer: WO 2011/038841

(56) Entgegenhaltungen:
- WO-A1-02/077087
- WO-A1-2007/022863

## Beschreibung

Die vorliegende Erfindung betrifft Polycarbonatzusammensetzungen und Copolycarbonatzusammensetzungen, z. B. Blends, mit verbesserten optischen Eigenschaften sowie deren Herstellung und ihre Verwendung zur Herstellung von Formteilen und daraus erhältliche Formteile.

Polycarbonate gehören zur Gruppe der technischen Thermoplaste. Sie finden vielseitige Anwendungen im Elektro- und Elektronikbereich, als Gehäusewerkstoff von Leuchten und bei Anwendungen, bei denen besondere mechanische in Verbindung mit guten optischen Eigenschaften gefordert sind.

Weitere große Einsatzgebiet sind daher optische Datenspeicher, z.B. CDs- und DVDs, Blu-ray-Discs und HD-DVDs, Extrusionsanwendungen zur Herstellung von Polycarbonatplatten, Streuscheiben und andere Displayanwendungen, optische Anwendungen im Automobilbereich, z.B. Verscheibungen, Kunststoffabdeckungen, Lichtleiterlemente und Polymerlichtleiterfasern und Diffusor Sheets für Hintergrundbeleuchtungen, LED-Anwendungen, Linsen, Kollimatoren sowie Lampenabdeckungen für Langfeldleuchten, aber auch die Herstellung von Wasserflaschen.

Bei allen diesen Anwendungen werden immer gute optische Eigenschaften in Verbindung mit guten mechanischen Eigenschaften und rheologischen Eigenschaften, z.B. guter Fließfähigkeit, bei gleichzeitig hoher thermischer Belastbarkeit, insbesondere bei der Herstellung oder Verarbeitung, gefordert.

Bei kontinuierlichen Herstellverfahren von Polycarbonaten wie z. B. nach dem Phasengrenzflächen- oder dem Schmelzepolykondensationsverfahren werden die Polycarbonatschmelzen starkem thermischem Stress und hoher Scherenergie in den Aufarbeitungsaggregaten ausgesetzt, wodurch bereits hier Schädigungen im Polymer auftreten können, die sich in der Herabsetzung der optischen Eigenschaften, oft in Form von verminderter Transmission und einem erhöhten Yellowness Index, äußern.

Aus EP0789053 A1 sind Mischungen von Phosphinen und Siliciumverbindungen zur Langzeitstabilisierung von Polycarbonaten bekannt, jedoch werden keine Mischungen zur Stabilisierung der Zusammensetzung während der Verarbeitung beschrieben.

In WO 00/73386 werden Polycarbonatformmassen zur Herstellung von Artikeln mit verminderter Staubanlagerung beschrieben, in denen Antioxidantien aus der Gruppe der Phosphine, Diphosphonite, Hydroxyphenylpropionate und anderen handelsüblichen Phosphorverbindungen eingesetzt werden. Das Problem der Stabilisierung der optischen Eigenschaften von Zusammensetzungen und die Verwendung von Phosphin/Phosphinoxid-Mischungen werden jedoch weder genannt noch beschrieben.

In EP 0625521. A1 werden Bisphosphinoxiddihydroxyarylmonomere als Monomerbausteine für Polycarbonate eingesetzt, um Polycarbonate mit hoher Glasübergangstemperatur, hoher Schlagzähigkeit und guter Flammhemmung zu erhalten.

Die EP 0346761 B1 beschreibt ein Verfahren zur Herstellung von Polycarbonaten nach dem Phasengrenzflächenverfahren unter Zuhilfenahme von Phosphinen bzw. Phosphinoxiden als Prozesskatalysatoren bei der Polykondensation, wobei die Katalysatoren bei der Aufarbeitung aus dem Polymer entfernt werden.

In keinem dieser den Stand der Technik kennzeichnenden Dokumente wird jedoch ein Hinweis darauf gegeben, wie die optischen Eigenschaften von Polycarbonatzusammensetzungen unter Erhalt der guten mechanischen Eigenschaften verbessert werden können, obwohl ein Bedarf an optisch hervorragenden Zusammensetzungen in den oben genannten Einsatzgebieten besteht.

Die Aufgabe der vorliegenden Erfindung war es daher, aromatische Polycarbonatzusammensetzungen und Copolycarbonatzusammensetzungen mit verbesserten optischen Eigenschaften unter Erhalt der guten rheologischen Eigenschaften zu entwickeln. Insbesondere sollte bei diesen Zusammensetzungen der Yellowness Index erniedrigt und die Transmission erhöht werden.

Überraschenderweise wurde gefunden, dass Mischungen von Phosphorverbindungen in den Oxidationsstufen +3 und +5 in situ erzeugt oder die den Polycarbonatzusammensetzungen zugefügt werden, den in einem kontinuierlichen Polycarbonatherstellungsprozess nach dem Phasengrenzflächenverfahren bzw. der Schmelzepolykondensation hergestellten Zusammensetzungen ein verbessertes optisches Eigenschaftsprofil bei gleichbleibenden rheologischen Eigenschaften vermitteln.

Sowohl in situ erzeugte als auch zugesetzte Paare von Phosphorverbindungen der Formeln (1) bis (6) in den Oxidationsstufen +5 und +3, die als Additiv bei der Herstellung zugesetzt werden verringern den Yellowness Index und erhöhen die Transmission der Polymerzusammensetzungen. Als Paar einer Phosphorverbindung sind hierbei Verbindungen der Oxidationsstufe +3 und +5 zu verstehen, wobei die Verbindung der Oxidationsstufe +5 das Oxidationsprodukt der Verbindung der Oxidationsstufe +3 ist.

Gegenstand der vorliegenden Erfindung sind daher Polycarbonatzusammensetzungen enthaltend Paare von Phosphorverbindungen der Formeln (1) und (2) oder (3) und (4) oder (5) und (6) oder Mischungen von mindestens zwei Paaren dieser Formeln. 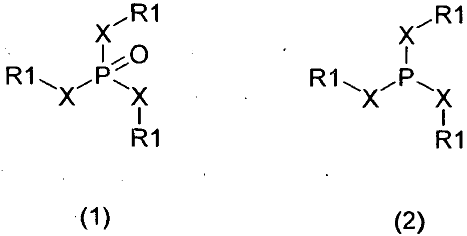 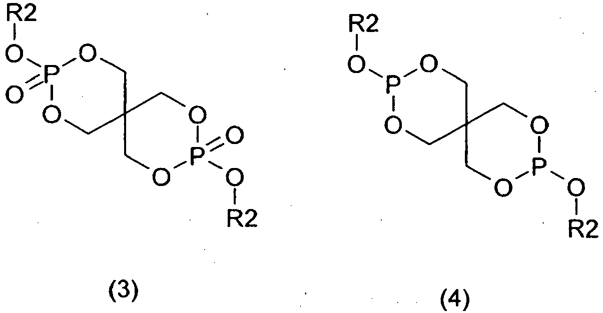 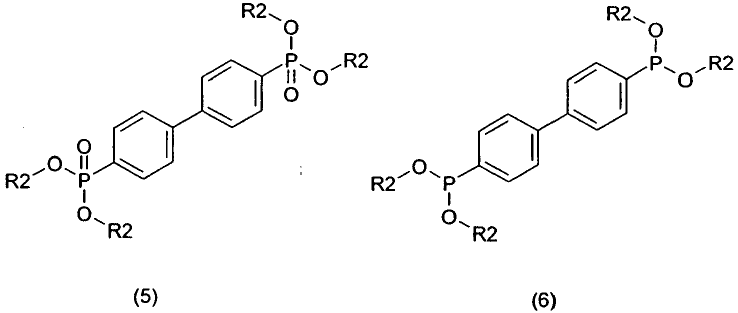 wobei X für eine chemische Einfachbindung oder für ein Sauerstoffatom stehen kann, und R1 und R2 unabhängig von einander für einen Phenylrest oder einen substituierten Phenylrest stehen kann. Der Phenylrest ist vorzugsweise mit C₁ - C₈-Alkyl, verzweigtem C₁ - C₈-Alkyl, oder Cumyl substituiert, wobei die Substituenten gleich oder verschieden sein können, gleiche Substituenten jedoch bevorzugt sind.
Bevorzugt sind die Phenylreste in den Positionen 2 und 4 oder 2, 4 und 6 substituiert.
Ganz besonders bevorzugt sind tert-Butylsubstituenten in diesen Positionen.

Der Phenylrest kann maximal 5 Substituenten tragen, wobei ein, zwei oder drei Substituenten bevorzugt und zwei oder drei Substituenten besonders bevorzugt sind.

Ferner können gleich benannte Reste R in einer Verbindung im Rahmen der gegebenen Definitionen unterschiedlich sein, wobei jedoch gleiche Reste bevorzugt sind.

In einer bevorzugten Ausführungsform werden die Verbindung (1), (3) oder (5) in situ in einem kontinuierlichen Prozess erzeugt, in dem die korrespondierende Verbindung (2), (4) oder (6) über ein Seitenaggregat einer Polycarbonatschmelze vorzugsweise unter Luftausschluss zudosiert werden und sich die Verbindungen (1), (3) oder (5) in einer in situ Reaktion innerhalb der Produktionsaggregate bilden, wobei die Konzentration von Verbindung (2), (4) oder (6) im anschließend isolierten Polycarbonatgranulat größer ist als die der Verbindung (1), (3) oder (5).

Der Übergang der Oxidationszahl +3 nach +5 kann in den Phosphorverbindungen (4) und (6) auch schrittweise erfolgen, d. h. dass zunächst erst eines der beiden Phosphoratome der Oxidationszahl +3 oxidiert wird, so dass Phosphorverbindungen vorliegen können, die sowohl über eine Oxidationszahl +3 als auch + 5 verfügen, wobei in einem solchen Fall die beiden Phosphorgruppen getrennt voneinander betrachtet werden müssen.

Der Gehalt an Verbindungen der Formeln (2), (4) oder (6) in der Zusammensetzung beträgt vorzugsweise 5 bis 1500 ppm, bevorzugt 10 bis 1200 ppm, weiter bevorzugt 30 bis 1000 ppm, noch weiter bevorzugt 50 bis 800 ppm, besonders bevorzugt 80 bis 400 ppm und am stärksten bevorzugt 100 bis 325 ppm.

Der Gehalt an Verbindungen der Formeln (1), (3) oder (5) in der Zusammensetzung beträgt vorzugsweise 5 bis 300 ppm, bevorzugt 10 bis 200 ppm, weiter bevorzugt 15 bis 100 ppm, und besonders bevorzugt 20 bis 60 ppm.

Die Menge von Verbindungen nach einer der Formeln (1), (3) oder (5) beträgt von von 2% bis 49 %, bevorzugt 2% bis 45 %, besonders bevorzugt 3% bis 40% ganz besonders bevorzugt 4% bis 35 % bezogen auf die Gesamtmasse der Verbindungen der Formeln (1) - (6).

In einer alternativen Ausführungsform werden die korrespondierenden Verbindungen der Oxidationsstufen +3 und +5 der Polycarbonatschmelze zugegeben, wobei der Anteil an Verbindungen der Oxidationsstufe +3 größer ist als der Anteil der Verbindungen der Oxidationsstufe +5.

Besonders bevorzugt sind Polycarbonatzusammensetzungen enthaltend Paare der von den Formeln (1) - (6) abgeleiteten Formeln (7) und (8) bzw. (9) und (10) bzw. (11) und (12) bzw. (13) und (14) 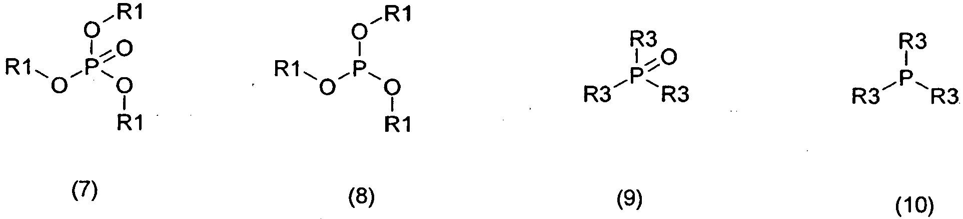 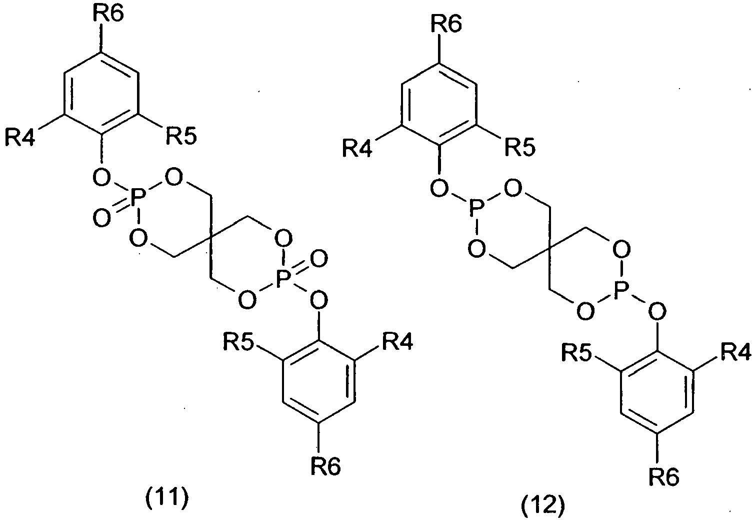 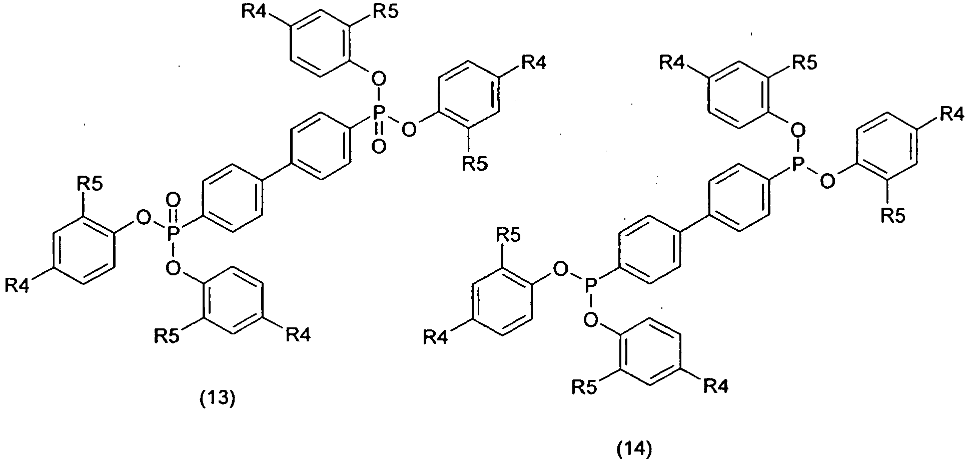 wobei R1 und R3 unabhängig von einander für einen Phenylrest oder einen substituierten Phenylrest stehen kann. Der Phenylrest ist vorzugsweise mit C₁ - C₈-Alkyl, verzweigtem C₁ - C₈-Alkyl, oder Cumyl substituiert, wobei die Substituenten gleich oder verschieden sein können, gleiche Substituenten jedoch bevorzugt sind.
und R4, R5 und R6 für H, verzweigtes C₁ - C₈- Alkyl oder Cumyl, vorzugsweise tert-Butyl oder Cumyl stehen.

Bevorzugt werden die Verbindungen (7), (9), (11) und (13) ebenfalls wie oben beschrieben in situ in einem kontinuierlichen Prozess erzeugt, in dem die Verbindung (8), (10), (12) bzw. (14) über ein Seitenaggregat einer Polycarbonatschmelze, vorzugsweise unter Luftausschluss, zudosiert werden und sich die Verbindungen (7), (9), (11) und (13) in einer in situ Reaktion innerhalb der Produktionsaggregate bilden, wobei die Konzentration der Verbindungen (7), (9), (11) und (13) im anschließend isolierten Polycarbonatgranulat kleiner ist als die der Verbindungen (8), (10), (12) oder(14).

Alternativ können aber auch Paare dieser Verbindungen oder Mischungen von Paaren zugesetzt werden.

Besonders bevorzugt sind ferner Polycarbonatzusammensetzungen enthaltend Paare der Formeln (15) und (16) oder (17) und (18) oder (19) und (20) oder (21) und (22) sowie Mischungen dieser Paare. 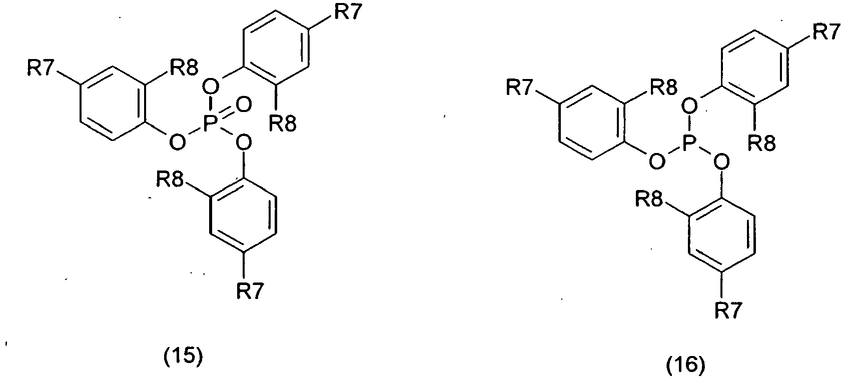 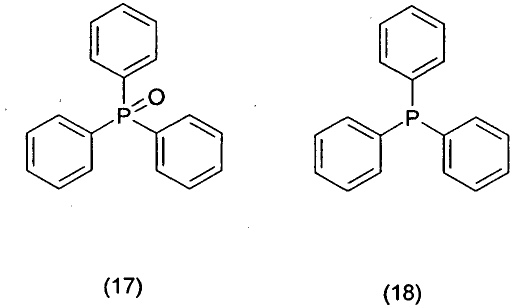 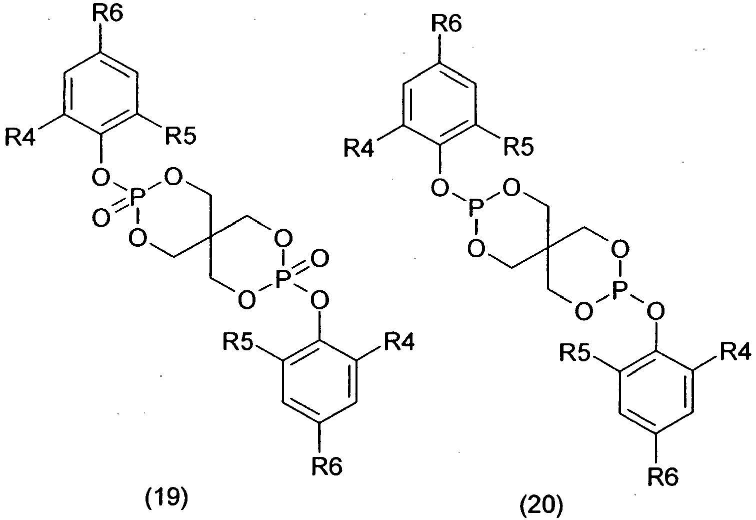 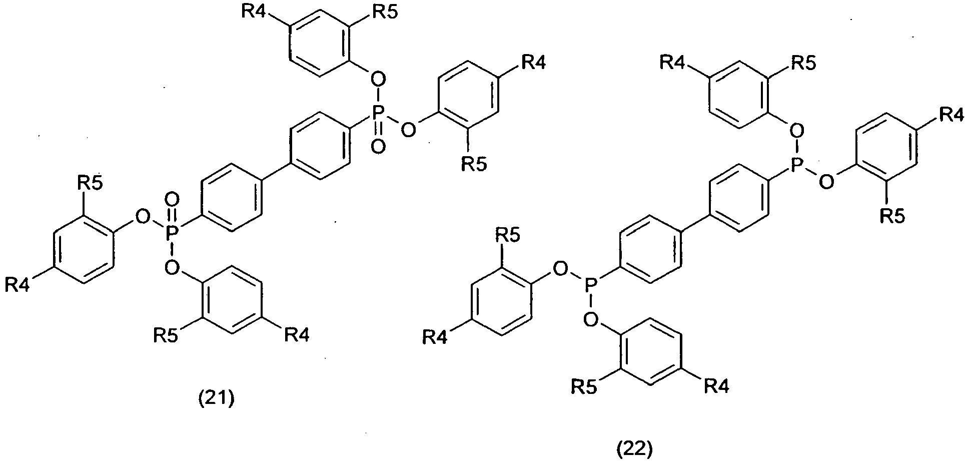 wobei R4, R5, R6, R7 und R8 für H, verzweigtes C₁ - C₈- Alkyl oder Cumyl, vorzugsweise tert-Butyl oder Cumyl stehen.

Wie oben werden die Verbindungen (15), (17), (19) und (21) vorzugsweise in situ in einem kontinuierlichen Prozess erzeugt, in dem die Verbindung (16), (18), (20) und (22) über ein Seitenaggregat einer Polycarbonatschmelze unter Luftausschluss zudosiert werden und sich die Verbindungen (15), (17), (19) und (21) in einer in situ Reaktion innerhalb der Produktionsaggregate bilden, wobei die Konzentration der (15), (17), (19) und (21) im anschließend isolierten Polycarbonatgranulat kleiner ist als die der Verbindungen (16), (18), (20) und (22).

Alternativ können aber auch Paare dieser Verbindungen oder Mischungen von Paaren zugesetzt werden.

Ganz besonders bevorzugt sind ferner Polycarbonatzusammensetzungen enthaltend Mischungen der Formeln (23) und (24) oder (17) und (18) oder (25) und (26) oder (27) und (28) sowie Mischungen dieser Paare, wobei eine Mischung der Formeln 17 und 18 am stärksten bevorzugt ist.

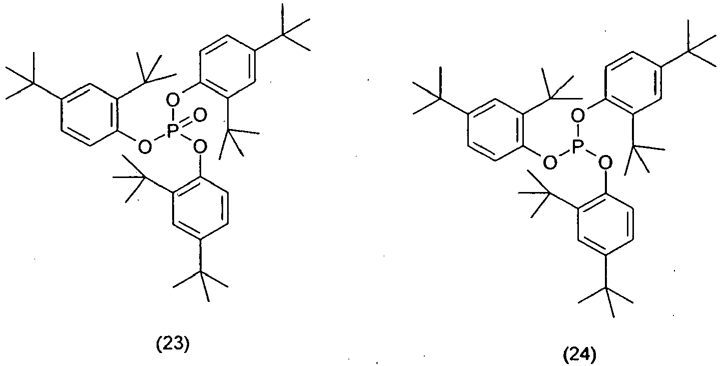

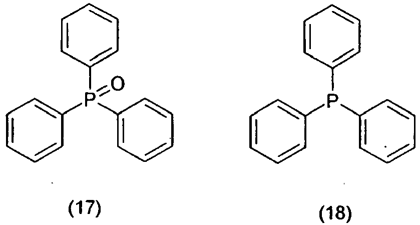

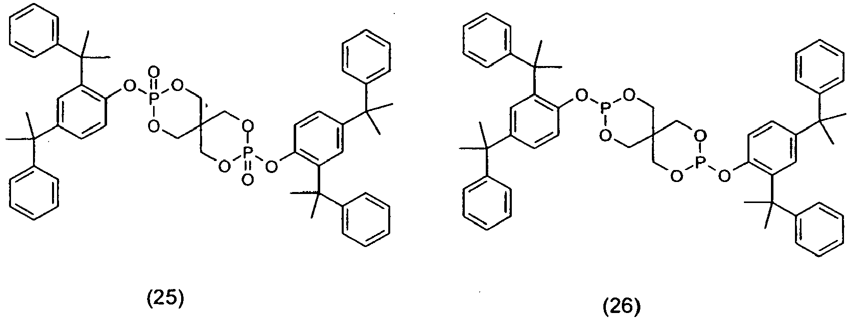

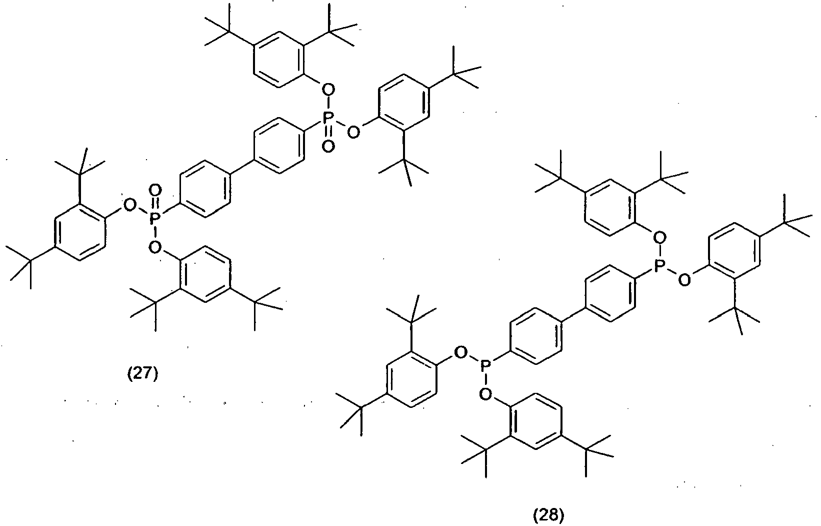

Auch diese Verbindungen können wie oben beschrieben hergestellt und/oder durch Additivierung zugesetzt werden.

Verbindungen mit Strukturelementen der Formeln (1) bis (28) werden als sekundäre Antioxidantien bezeichnet (Hydroperoxid-Zersetzer) bzw. deren Folgeprodukte (Plastics Additives Handbook, 5th Edition, Hanser Verlag München, 2001).

Den erfindungsgemäßen Zusammensetzungen können optional auch noch weitere primäre Antioxidantien (z.B. Radikalfänger), wie sterisch gehinderte Phenole oder HALS-Stabilisatoren zugesetzt werden (Plastics Additives Handbook, 5th Edition, Hanser Verlag München, 2001).

Das Verhältnis von sekundären zu primären Antioxidantien kann zwischen 6:1 bis 1:6, bevorzugt 5:1 bis 1:5 besonders bevorzugt 4:1 bis 1:4 und ganz besonders bevorzugt 3:1 bis 1:3 betragen.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Die thermoplastischen Polycarbonate, Copolycarbonate einschließlich der thermoplastischen, aromatischen Polyestercarbonate, beide unter dem Begriff Polycarbonat zusammengefasst, haben Molekulargewichte M_{w} (Gewichtsmittel Mw, ermittelt durch Gelpermeationschromatographie (GPC) Messung, Polycarbonateichung) von 10.000 bis 200.000, vorzugsweise von 15.000 bis 100.000 und besonders bevorzugt von 17.000 - 70.000 g/mol.

Die Zusammensetzungen der vorliegenden Erfindung können weiterhin mindestens ein Additiv enthalten ausgewählt aus der Gruppe bestehend aus UV-Stabilisatoren und Entformungsmitteln sowie gegebenenfalls Farbmittel.

Der Anteil dieser Additive in der Zusammensetzung beträgt im allgemeinen 0,001 bis 1,000, bevorzugt 0,005 bis 0,800, besonders bevorzugt 0,04 bis 0,50 Gew.-% (bezogen auf die Gesamtzusammensetzung).

Als UV-Stabilisatoren sind organische UV-Stabilisatoren geeignet. Die UV-Stabilisatoren sind bevorzugt ausgewählt aus der Gruppe, die Benzotriazole (z. B. Tinuvine der Fa. Ciba), Triazine CGX-06 der Fa. Ciba), Benzophenone (Uvinule der Fa. BASF), Cyanacrylate (Uvinule der Fa. BASF), Zimtsäureester und Oxalanilide sowie Mischungen dieser UV-Stabilisatoren umfaßt.

Beispiele für geeignete UV-Absorber sind:
a) Malonester der Formel (I): 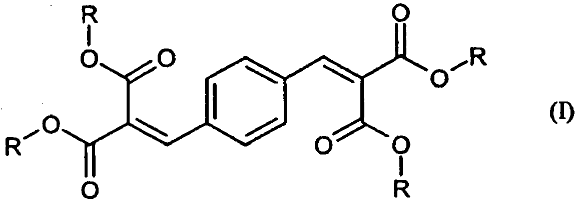 Worin R Alkyl bedeutet. Bevorzugt steht R für C1-C6-Alkyl, insbesondere für C1-C4-Alkyl und besonders bevorzugt für Ethyl.
b) Benzotriazol-Derivate nach Formel (II): 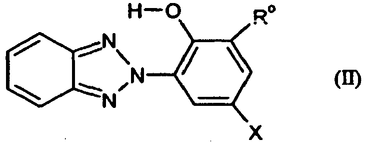
   In Formel (II) sind R° enthaltend und X gleich oder verschieden und bedeuten H oder Alkyl oder Alkylaryl.
   Bevorzugt sind dabei Tinuvin® 329 mit X = 1,1,3,3-Tetramethylbutyl und R° = H, Tinuvin® 350 mit X = tert-Butyl und R0 = 2-Butyl und Tinuvin® 234 mit X und R° = 1,1 -Dimethyl-1-phenyl
c) Dimere Benzotriazol-Derivate nach Formel (III): 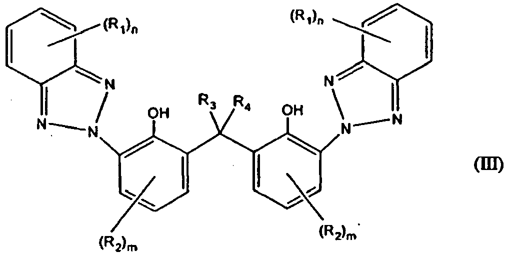
   In Formel (III) sind R1 und R2 gleich oder verschieden und bedeuten H, Halogen, C1- C10-Alkyl, C5- C10-Cycloalkyl, C7-C 13 -Aralkyl, C6-C 14 -Aryl, -OR5 oder -(CO)-O-R 5 mit R5 = H oder C1-C4-Alkyl.
   In Formel (III) sind R3 und R4 ebenfalls gleich oder verschieden und bedeuten H, C1-C4-Alkyl, C5- C6 -Cycloalkyl, Benzyl oder C6-C 14-Aryl.
   In Formel (III) bedeuten m 1,2 oder 3 und n 1,2,3 oder 4.
   Bevorzugt ist dabei Tinuvin® 360 mit R1 = R3 = R4 = H; n = 4; R2 = 1,1,3,3-Tetramethylbutyl; m = 1
d) Dimere Benzotriazol-Derivate nach Formel (IV): 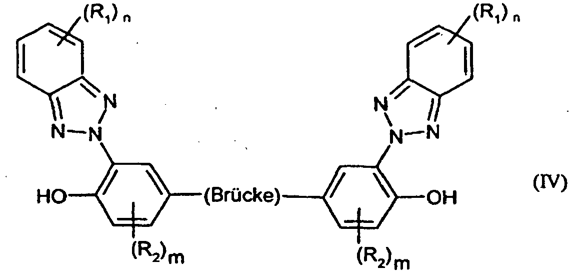 worin die Brücke 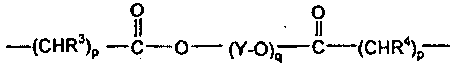 bedeutet, R1 , R2 , m und n die für Formel (III) genannte Bedeutung haben, und worin p eine ganze Zahl von O bis 3 ist, q eine ganze Zahl von 1 bis 10 ist, Y gleich -CH2-CH2-, -(CH2)3-, -(CH2)4-, -(CH2)5-, -(CH2)6-, oder CH(CH3)-CH2-ist und R3 und R4 die für Formel (III) genannte Bedeutung haben.
   Bevorzugt ist dabei Tinuvin® 840 mit R1 = H; n = 4; R2 = tert-Butyl; m = 1; R2 ist in ortho-Stellung zur OH-Gruppe angebracht; R3 = R4 = H; p = 2; Y = -(CH2)5-; q = 1
e) Triazin-Derivate nach Formel (V): 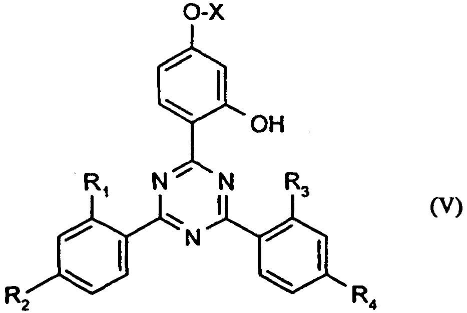 worin R1, R2, R3, R4 gleich oder verschieden sind und H, Alkyl, Aryl, CN oder Halogen sind und X gleich Alkyl, vorzugsweise iso-Octyl, ist.
   Bevorzugt ist dabei Tinuvin® 1577 mit R1 = R2 = R3 = R4 = H; X = Hexyl sowie Cyasorb® UV-1 164 mit R1 = R2 = R3 = R4 = Methyl; X Octyl
f) Triazin-Derivate der folgenden Formel (Va): 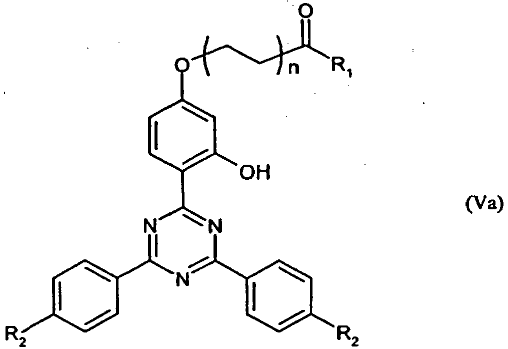 worin R1 gleich C1 Alkyl bis C17-Alkyl bedeutet, R2 gleich H oder C1-Alkyl bis C4-Alkyl bedeutet und n gleich 0 bis 20 ist.
g) Dimere Triazin-Derivate der Formel (VI): 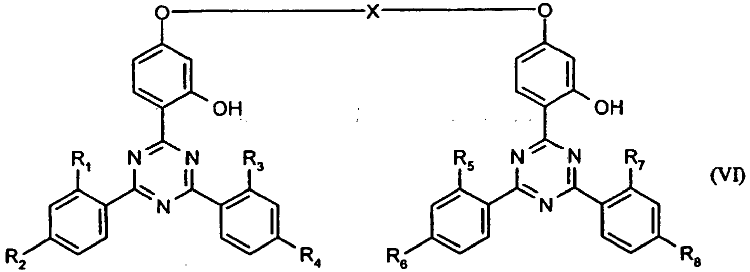 worin R1, R2, R3, R4, R5, R6, R7, R8 gleich oder verschieden sein können und H, Alkyl, CN oder Halogen bedeuten und X gleich Alkyliden, vorzugsweise Methyliden oder -(CH2 CH2-O-)n-C(=O)- ist und n für 1 bis 10, vorzugsweise 1 bis 5, insbesondere 1 bis 3.
h) Diarylcyanoacrylate der Formel (VII): 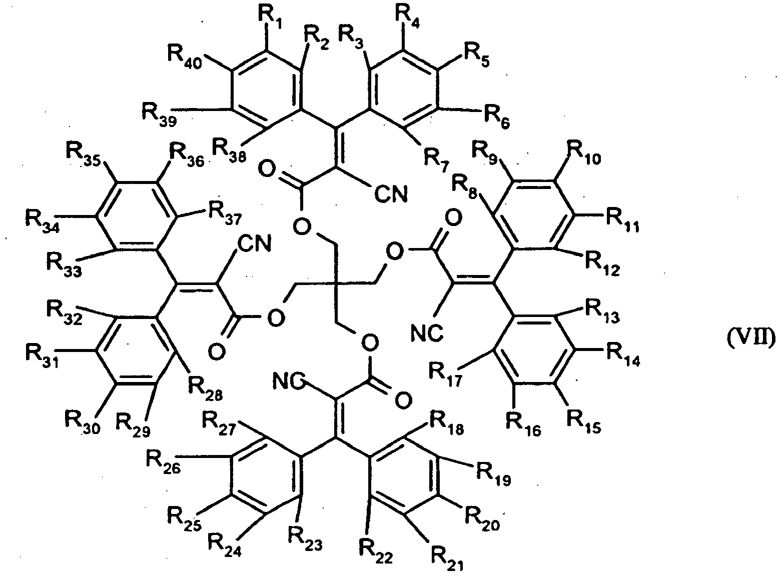
worin R1 bis R40 gleich oder verschieden sein können und H, Alkyl, CN oder Halogen bedeuten.
Bevorzugt ist dabei Uvinul® 3030 mit R1 bis R40 = H.

Besonders bevorzugte UV-Stabilisatoren für die erfindungsgemäßen Formmassen sind Verbindungen aus der Gruppe, die aus den Benzotriazolen (b) und dimeren Benzotriazolen (c und d), den Malonestern (a) und den Cyanacrylate (h) sowie Mischungen dieser Verbindungen besteht.

Die UV-Stabilisatoren werden eingesetzt in Mengen von 0,01 Gew.-% bis 15,00 Gew.-% bezogen auf die Formmasse, bevorzugt in Mengen von 0,05 Gew.-% bis 1,00 Gew.-%, besonders bevorzugt in Mengen von 0,08 Gew.-% bis 0,5 Gew.-% und ganz besonders bevorzugt in Mengen von 0,1 Gew.-% bis 0,4 Gew.-% bezogen auf die Gesamtzusammensetzung.

Die den erfindungsgemäßen Zusammensetzungen gegebenenfalls zugesetzten Entformungsmittel sind bevorzugt ausgewählt aus der Gruppe, die Pentaerythrittetrastearat, Glycerinmonostearat, Stearylstearat und Propoandiolstearat sowie deren Mischungen umfaßt. Die Entformungsmittel werden eingesetzt in Mengen von 0,05 Gew.-% bis 2,00 Gew.-% bezogen auf die Formmasse, bevorzugt in Mengen von 0,1 Gew.% bis 1,0 Gew.-%, besonders bevorzugt in Mengen von 0,15 Gew.-% bis 0,60 Gew.-% und ganz besonders bevorzugt in Mengen von 0,2 Gew.-% bis 0,5 Gew.-% bezogen auf die Gesamtzusammensetzung.

Als primäre Antioxidantien kommen bevorzugt sterisch gehinderte Phenole (z. B. Irganox-Typen der Fa. Ciba, beispielsweise Irganox 1076 (Octadecyl-3-(3,5-di-tert.butyl-4-hydroxyphenyl)-propionat), Irganox 1010 (Pentaerythritol-tetrakis(3-(3,5-di-tert.butyl-4-hydroxyphenyl)-propionat) oder Irganox 1035 (Thiodiethylen bis (3-(3,5-di-tert.butyl-4-hydroxyphenyl)-propionat) ) zum Einsatz.

Ferner können die erfindungsgemäßen Zusammensetzungen übliche Additive wie andere Thermostabilisatoren, Antistatika, Farbmittel, Fließhilfsmittel und Flammschutzmittel enthalten.

Die Herstellung der erfindungsgemäß zu verwendenden Polycarbonate erfolgt prinzipiell in bekannter Weise aus Diphenolen, Kohlensäurederivaten und gegebenenfalls Verzweigern.

Allgemein sind Verfahren zur Polycarbonatsynthese bekannt und in zahlreichen Publikationen beschrieben. EP-A 0 517 044, WO 2006/072344, EP-A 1 609 818, WO 2006/072344 und EP-A 1 609 818 und dort zitierte Dokumente beschreiben beispielsweise das Phasengrenzflächen und das Schmelzeverfahren zur Herstellung von Polycarbonat.

Für die Herstellung von Polycarbonaten geeignete Dihydroxyarylverbindungen sind solche der Formel (29)

HO-Z-OH (29)

in welcher
Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (29) für einen Rest der Formel (30) 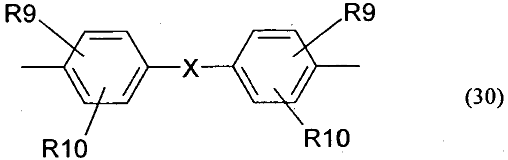 in der
R⁹ und R¹⁰ unabhängig voneinander für H, C₁-C₁₈-Alkyl-, C₁-C₁₈-Alkoxy, Halogen wie Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
X (Formel 30) für eine Einfachbindung, -SO₂- -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C5 bis C12-Cycloalkyliden, -O-, -SO-, -CO-, -S-, -SO₂-, besonders bevorzugt steht X für eine Einfachbindung, Isopropyliden, C5 bis C12 Cycloalkyliden oder Sauerstoff.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl, 4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-3,3,5-trimetylcyclohexan.

Besonders bevorzugte Diphenole sind 2,2-Bis-(4-hydroxyphenyl)-propan (BPA), 4,4'-Dihydroxydiphenyl (DOD) und 2,2-Bis-(3-methyl-4-hydroxyphenyl)-propan, 1,1-bis-(4-hydroxyphenyl)-3,3,5-trimetylcyclohexan (TMC).

Diese und weitere geeignete Diphenole sind z.B. in den US-A -PS 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der franzoesischen Patentschrift 1 561 518, in der Monographie "H. Schnell, Chemistry and Physics of Polycarbonates, Interscience Publishers, New York 1964, S. 28ff; S.102ff', und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die Durchführung der Polycarbonatsynthese erfolgt kontinuierlich. Die Reaktion in der Phasengrenzfläche (LPC-Verfahren) kann in Umpumpreaktoren, Rohrreaktoren, oder Rührkesselkaskaden oder deren Kombinationen erfolgen, wobei durch Verwendung der bereits erwähnten Mischorgane sicherzustellen ist, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Die Menge an einzusetzenden Kettenabrecher in Form von Monophenolen wie Phenol, tert.-Butylphenol oder Cumylphenol beträgt 0,5 Mol-% bis 10,0 Mol%, bevorzugt 1,0 Mol% bis 8,0 Mol%, besonders bevorzugt 2.0 Mol% bis 6.0 Mol% bezogen auf Mole an jeweils eingesetzten Diphenolen. Die Zugabe der Kettenabbrecher kann vor, während oder nach der Phosgenierung erfolgen, bevorzugt als Lösung in einem Lösungsmittelgemisch aus Methylenchlorid und Chlorbenzol (8-15 Gew.%-ig).

Die in der Phasengrenzflächensynthese verwendeten Katalysatoren sind tert. Amine, insbesondere Triethylamin, Tributylamin, Trioetylamin, N-Ethylpiperidin, N-Methylpiperidin, N-i/n-Propylpiperidin, besonders bevorzugt Triethylamin und N-Ethylpiperidin. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung. Die Dosierung des Katalysators oder der Katalysatoren kann in Substanz, in einem inerten Lösungsmittel, vorzugsweise dem der Polycarbonatsynthese, oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt zwischen 0,001 bis 10,000 Mol % bezogen auf Mole eingesetzte Bisphenole, bevorzugt 0,01 bis 8,00 Mol %, besonders bevorzugt 0,05 bis 5,00 Mol %.

Die organische Phase wird mit entsalztem oder destilliertem Wasser wiederholt gewaschen. Die Abtrennung der, gegebenenfalls mit Teilen der wäßrigen Phase dispergierten, organischen Phase nach den einzelnen Waschschritten geschieht mittels Absetzkessel, Rührkessel, Coalescer oder Separatoren bzw. Kombinationen aus diesen Massnahmen, wobei das Waschwasser zwischen den Waschschritten gegebenenfalls unter Verwendung von aktiven oder passiven Mischorganen zudosiert werden kann.

Die Isolierung des Polymers aus der Lösung kann durch Verdampfen des Lösungsmittels mittels Temperatur, Vakuum oder eines erhitzten Schleppgases erfolgen.

Aus den so erhaltenen hochkonzentrierten Polymerschmelzen können die Reste des Lösungsmittels entweder direkt aus der Schmelze mit Ausdampfextrudern, Dünnschichtverdampfern, Fallfilmverdampfern, Strangverdampfern oder durch Friktionskompaktierung, gegebenenfalls auch unter Zusatz eines Schleppmittels, wie Stickstoff oder Kohlendioxid oder unter Verwendung von Vakuum, entfernt werden, alternativ auch durch anschließende Kristallisation und Ausheizen der Reste des Lösungsmittels in der festen Phase.

Die Reaktion in der Schmelze (Schmelzepolykondensationsverfahren, SPC-Verfahren) kann nach dem Umesterungsverfahren diskontinuierlich oder auch kontinuierlich gestaltet werden. Nachdem die Dihydroxyarylverbindungen und Diarylcarbonate, ggf. mit weiteren Verbindungen, als Schmelze vorliegen, wird in Gegenwart eines geeigneten Katalysators die Umsetzung gestartet werden. Der Umsatz bzw. das Molekulargewicht wird bei steigenden Temperaturen und fallenden Drücken in geeigneten Apparaten und Vorrichtungen durch Abführen der sich abspaltenden Monohydroxyarylverbindung solange erhöht, bis der angestrebte Endzustand erreicht ist. Durch Wahl des Verhältnisses Dihydroxyarylverbindung zu Diarylcarbonat, der durch Wahl der Verfahrensweise bzw. Anlage zur Herstellung des Polycarbonats gegebenen Verlustrate des Diarylcarbonats über die Brüden und ggf. zugesetzter Verbindungen, wie beispielsweise einer höhersiedenden Monohydroxyarylverbindung, werden die Endgruppen in Art und Konzentration geprägt.

Vorzugsweise ist das kontinuierliche Verfahren zur Herstellung von Polycarbonaten dadurch gekennzeichnet, dass eine oder mehrere Dihydroxyarylverbindungen mit dem Diarylcarbonat, ggf. auch anderer zugesetzter Reaktanten unter Verwendung der Katalysatoren aufgeschmolzen werden und nach einer Vorkondensation ohne Abtrennen der gebildeten Monohydroxyarylverbindung in sich dann daran anschließenden mehreren Reaktions-Verdampfer-Stufen bei schrittweise steigenden Temperaturen und schrittweise fallenden Drucken das Molekulargewicht bis zum gewünschten Niveau aufgebaut wird.

Die für die einzelnen Reaktions-Verdampfer-Stufen geeigneten Vorrichtungen, Apparate und Reaktoren sind entsprechend dem Verfahrensverlauf Wärmetauscher, Entspannungsapparate, Abscheider, Kolonnen, Verdampfer, Rührbehälter und Reaktoren oder sonstige käufliche Apparate, welche die nötige Verweilzeit bei ausgewählten Temperaturen und Drucken bereitstellen. Die gewählten Vorrichtungen müssen den nötigen Wärmeeintrag ermöglichen und so konstruiert sein, dass sie den kontinuierlich wachsenden Schmelzviskositäten gerecht werden.

Alle Vorrichtungen sind über Pumpen, Rohrleitungen und Ventile miteinander verbunden. Die Rohrleitungen zwischen allen Einrichtungen sollten selbstverständlich so kurz wie möglich sein und die Krümmungen der Leitungen so gering wie möglich gehalten werden, um unnötig verlängerte Verweilzeiten zu vermeiden. Dabei sind die äußeren, das heißt technischen Rahmenbedingungen und Belange für Montagen chemischer Anlagen zu berücksichtigen.

Zur Durchführung des Verfahrens nach einer bevorzugten kontinuierlichen Verfahrensweise können die Reaktionspartner entweder gemeinsam aufgeschmolzen oder aber die feste Dihydroxyarylverbindung in der Diarylcarbonatschmelze oder das feste Diarylcarbonat in der Schmelze der Dihydroxyarylverbindung gelöst werden oder beide Rohstoffe werden als Schmelze, bevorzugt direkt aus der Herstellung, zusammengeführt. Die Verweilzeiten der getrennten Schmelzen der Rohstoffe, insbesondere die der Schmelze der Dihydroxyarylverbindung, werden so kurz wie möglich eingestellt. Das Schmelzegemisch kann dagegen wegen des im Vergleich zu den einzelnen Rohstoffen erniedrigten Schmelzpunktes des Rohstoffgemisches bei entsprechend niedrigeren Temperaturen ohne Qualitätseinbußen länger verweilen.

Danach wird der Katalysator, vorzugsweise in Phenol gelöst, zugemischt und die Schmelze auf die Reaktionstemperatur erhitzt. Diese beträgt zu Beginn des technisch bedeutsamen Prozesses zur Herstellung von Polycarbonat aus 2,2-Bis-(4-hydroxyphenyl)-propan und Diphenylcarbonat 180 bis 220°C, vorzugsweise 190 bis 210°C, ganz besonders bevorzugt 190°C. Bei Verweilzeiten von 15 bis 90 min, vorzugsweise 30 bis 60 min, wird das Reaktionsgleichgewicht eingestellt, ohne dass die gebildete Hydroxyarylverbindung entnommen wird. Die Reaktion kann bei Atmosphärendruck, aber aus technischen Gründen auch bei Überdruck gefahren werden. Der bevorzugte Druck in technischen Anlagen beträgt 2 bis 15 bar absolut.

Das Schmelzegemisch wird in eine erste Vakuumkammer, deren Druck auf 100 bis 400 mbar, vorzugsweise auf 150 bis 300 mbar eingestellt wird, entspannt und direkt danach in einer geeigneten Vorrichtung bei gleichem Druck wieder auf die Eintrittstemperatur erhitzt. Bei dem Entspannungsvorgang wird die entstandene Hydroxyarylverbindung mit noch vorhandenen Monomeren verdampft. Nach einer Verweilzeit von 5 bis 30 min in einer Sumpfvorlage ggf. mit Umpumpung bei gleichem Druck und gleicher Temperatur wird das Reaktionsgemisch in eine zweite Vakuumkammer, deren Druck 50 bis 200 mbar, vorzugsweise 80 bis 150 mbar beträgt, entspannt und direkt danach in einer geeigneten Vorrichtung bei gleichem Druck auf eine Temperatur von 190 bis 250°C, bevorzugt 210 bis 240°C, besonders bevorzugt 210 bis 230°C, erwärmt. Auch hierbei wird die entstandene Hydroxyarylverbindung mit noch vorhandenen Monomeren verdampft. Nach einer Verweilzeit von 5 bis 30 min in einer Sumpfvorlage, ggf. mit Umpumpung, bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280°C, bevorzugt 240 bis 270°C, besonders bevorzugt 240 bis 260°C, erwärmt. Auch hierbei wird die entstandene Hydroxyarylverbindung mit noch vorhandenen Monomeren verdampft. Nach einer Verweilzeit von 5 bis 20 min in einer Sumpfvorlage ggf. mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300°C, vorzugsweise 260 bis 290°C, besonders bevorzugt 260 bis 280°C, erwärmt. Auch hierbei wird die entstandene Hydroxyarylverbindung mit noch vorhandenen Monomeren verdampft.

Die Zahl dieser Stufen, hier beispielhaft 4, kann zwischen 2 und 6 variieren. Die Temperaturen und Drucke sind bei Änderung der Stufigkeit entsprechend anzupassen, um vergleichbare Resultate zu erhalten.

Die in diesen Stufen erreichte relative Viskosität des Vorkondensats des oligomeren Carbonats liegt zwischen 1,04 und 1,20, bevorzugt zwischen 1,05 rund 1,15, besonders bevorzugt zwischen 1,06 bis 1,10.

In einer bevorzugten Ausführungsform wird das so erzeugte Oligocarbonat nach einer Verweilzeit von 5 bis 20 min in einer Sumpfvorlage gegebenenfalls mit Umpumpung bei gleichem Druck und gleicher Temperatur wie in der letzten Flash-/Verdampferstufe in einen Scheiben- oder Korbreaktor gefördert und bei 250 bis 310°C, bevorzugt 250 bis 290°C, besonders bevorzugt 250 bis 280°C, bei Drucken von 1 bis 15 mbar, vorzugsweise 2 bis 10 mbar, bei Verweilzeiten von 30 bis 90 min, vorzugsweise 30 bis 60 min, weiter aufkondensiert. Das Produkt erreicht eine relative Viskosität von 1,12 bis 1,28, bevorzugt 1,13 bis 1,26, besonders bevorzugt 1,13 bis 1,24. Die diesen Reaktor (Mittelviskos-Reaktor) verlassende Schmelze wird in einem weiteren Scheiben- oder Korbreaktor (Hochviskos-Reaktor) auf die gewünschte Endviskosität bzw. das Endmolekulargewicht durch Abtrennen des Kondensationsproduktes Phenol gebracht. Dabei betragen die Temperaturen 270 bis 330°C, bevorzugt 280 bis 320°C, besonders bevorzugt 280 bis 310°C, der Druck 0,01 bis 3,00 mbar, vorzugsweise 0,2 bis 2,0 mbar, bei Verweilzeiten von 60 bis 180 min, vorzugsweise 75 bis 150 min. Die rel. Viskositäten werden auf das für die vorgesehene Anwendung nötige Niveau eingestellt und betragen 1,18 bis 1,40, bevorzugt 1,18 bis 1,36, besonders bevorzugt 1,18 bis 1,34.

Die Funktion der beiden Korbreaktoren kann, auch in einem Korbreaktor zusammengefasst werden.

Die Brüden aus allen Verfahrensstufen werden unmittelbar abgeleitet, gesammelt und aufgearbeitet. Diese Aufarbeitung erfolgt in der Regel destillativ, um hohe Reinheiten der der Produkte zu erzielen.

In dem Verfahren der vorliegenden Erfindung werden der Schmelze durch Seitenextruder im Extruder die oben beschriebenen Phosphor III- und Phosphor V-Verbindungen sowie optional weitere Additive zugesetzt.

Hierzu werden der Polycarbonatschmelze vor dem Abspinnen (Granulierung) über ein Seitenaggregat (Seitenextruder) die Verbindungen aus der Gruppe, die die Formeln (2), (4), und (6) sowie deren Mischungne umfaßt, als reine Substanz oder als Masterbatch (max. 10 Gew.-%) in Polycarbonat zugeführt. Dieser Masterbatch kann ggf. weitere Additive wie UV-Stabilisatoren, Entformungsmittel oder Farbadditive enthalten.

Vorzugsweise wird im Anschluß an die Zugabe der Phosphorverbindung(en) wird in einem weiteren Schritt der Gehalt an Phosphorverbindungen der Oxidationsstufen +3 und +5 nach den Formeln (1) - (6) bestimmt, wobei der der Gehalt an Phosphorverbindungen der Oxidationsstufen +3 größer sein muß als der an Phosphorverbindungen der Oxidationsstufen +5. Sofern der Gehalt an Phosphorverbindungen der Oxidationsstufen +3 kleiner ist als der von Phosphorverbindungen der Oxidationsstufen +5 wird in einem weiteren Schritt zusätzliches Phosphorverbindungen der Oxidationsstufen +3 zur Polycarbonatschmelze zudosiert

Der Zusatz von Additiven dient der Verlängerung der Nutzungsdauer der Polycarbonatzusammensetzung durch Stabilisatoren, die einen Abbau der Zusammensetzungsbestandteile verhindern, der Farbgebung des Endprodukts, der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt. Dabei können die Additive beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Geeignete übliche Additive für Polycarbonatzusammensetzungen sind beispielsweise beschrieben in "Additives for Plastics Handbook, John Murphy, Elsevier, Oxford 1999", im "Plastics Additives Handbook, Hans Zweifel, Hanser, München 2001" oder in WO 99/55772, S. 15-25.

Desweiteren können Farbmittel, wie organische Farbstoffe oder Pigmente oder anorganische Pigmente, IR-Absorber, einzeln, im Gemisch oder auch in Kombination mit Stabilisatoren, Glas(hohl)kugeln, anorganischen Füllstoffen oder organische oder anorganische Streupigmente zugesetzt werden.

Die erfindungsgemäßen Polycarbonat-Zusammensetzungen können auf üblichen Maschinen, beispielsweise auf Extrudern oder Spritzgussmaschinen, zu beliebigen Formkörpern, bzw. Formteile zu Folien oder Platten oder Flaschen, in üblicher Weise verarbeitet werden.

Die so erhältlichen Polycarbonatzusammensetzungen mit verbesserten optischen Eigenschaften gemäß vorliegender Erfindung, können zur Herstellung von Extrudaten (Platten, Folien und deren Laminate; z. B. für Kartenanwendungen und Rohre) und Formkörpern (Flaschen), insbesondere solchen zur Verwendung im transparenten Bereich, besonders im Bereich optischer Anwendungen wie z.B. Platten, Stegplatten, Verglasungen, Streu- oder Abdeckscheiben, Lampenabdeckungen, Kunststoffabdeckscheiben, Lichtleitelemente oder optischer Datenspeicher, wie Audio-CD, CD-R(W), DVD, DVD-R(W), Minidiscs in ihren verschiedenen nur lesbaren oder aber einmalbeschreibbaren gegebenenfalls auch wiederholt beschreibbaren Ausführungsformen sowie Datenträger für near-field-Optiken. Weiterhin zur Herstellung von Gegenständen für den Elektro/Elektronik und IT-Bereich.

Ein weiteres großes Einsatzgebiet der erfindungsgemäßen Polycarbonatzusammensetzungen sind Streuscheiben und andere Displayanwendungen, aber auch optische Anwendungen im Automobilbereich, wie Verscheibungen, Kunststoffabdeckungen, Streuscheiben oder Lichtleiterlemente, Kollimatoren, Linsen, LED-Anwendungen, Polymerlichtleiterfasern, Diffusor Sheets für Hintergrundbeleuchtung, sowie Lampenabdeckungen für Langfeldleuchten.

Die Polycarbonat-Zusammensetzungen der vorliegenden Erfindung können auch zur Herstellung von Compounds, Blends wie z. B. PC/ABS, PCASA, PC/SAN, PC/PBT ,PC/PET oder PC/PETG und Bauteilen verwendet werden, die besondere Anforderungen an optische und mechanische Eigenschaften stellen, wie beispielsweise LED Anwendungen, Linsen Kollimatoren, Leuchtdioden, Lichtleiter, Lampenabdeckungen, Automobilbereich wie Frontscheinwerfer und Verscheibungen., Medizinbereich wie Dialysatoren, Konnektoren, Hähne, Verpackung wie Flaschen, Behälter.

Die Extrudate und Formkörper bzw. Formteile aus den erfindungsgemäßen Polymeren sind ebenfalls Gegenstand der vorliegenden Anmeldung.

### Beispiele

### Verwendete Rohstoffe:

**PC 1** ist ein Polycarbonat auf Basis von Bisphenol A und Phosgen mit einer Schmelze-Volumenfließrate (MVR) von 14,5 cm³/10 min (260°C/2,16 kg).
**PC 2** ist ein Polycarbonat auf Basis von Bisphenol A und Phosgen mit einem MVR von 15,7 cm³/1O min (260°C/2,16 kg).
**PC 3** ist ein Polycarbonat auf Basis von Bisphenol A und Phosgen mit einem MVR von 15,5 cm³/10 min (260°C/2,16 kg).
**PC 4** ist ein Polycarbonat auf Basis von Bisphenol A und Phosgen mit einem MVR von 8,9 cm³/10 min (260°C/2,16 kg).
   - TPP:: Triphenylphosphin
   - Irgafos 168:: Phosphit der Fa. BASF/Ciba (Tris-(2,4-di-tert.-butyl)phenyl-phosphit)

### Charakterisierung der erfindungsgemäßen Formmassen (Testmethoden):

### Farbmessung:

Bestimmung des Yellowness-Index YI an Formkörpern durch Messung an Normprüfkörpern (4 mm Dicke) nach ASTM E313.

Bestimmung der Transmission an Formkörpern durch Messung an Normprüfkörpern (4 mm Dicke) nach ASTM E313.

Die Bestimmung der Schmelze-Volumenfließrate (MVR) erfolgt bei 300°C und 1,2 kg Belastung bzw. bei 260°C und 2,16 kg Belastung mit einem Schmelzindexprüfgerät nach ISO 1133.

Die Bestimmung des I-MVR erfolgt analog wie oben beschrieben (ISO 1133), allerdings erst nach einer thermischen Dauerbelastung von 20 Minuten.

Tab. 1 zeigt den erfindungsgemäßen Effekt der verbesserten optischen Eigenschaften, speziell die erhöhte Transmission und den reduzierten Yellowness Index bei erhöhter Verarbeitungstemperatur.

| **Ergebnisse:** | | **Vergleich 1** | **PC 1** | **PC2** | **PC 3** | **PC 4** |
|---|---|---|---|---|---|---|
| TPP-Gehalt | ppm | - | 168 | 321 | 310 | 192 |
| TPPO-Gehalt | ppm | - | 32 | 26 | 55 | 23 |
| MVR 260°C (2,16 kg) | ml/10min | 13,2 | 14,5 | 15,7 | 15,5 | 8,9 |
| IMVR20' 260°C (2,16 kg) | ml/10min | 13,3 | 13,9 | 15,0 | 15,0 | 8,8 |
| **Delta MVR / IMVR20'** | | **0,1** | **-0,6** | **-0,7** | **-0,5** | **-0,1** |

| **opt.Daten 280°C/80°C** | | | | | | |
|---|---|---|---|---|---|---|
| Transmission | % | 89,97 | 90,02 | 89,96 | 90,0 | 90,0 |
| Y.I. | | 1,19 | 0,91 | 1 | 0,9 | 0,9 |

| **opt.Daten 300°C/80°C** | | | | | | |
|---|---|---|---|---|---|---|
| Transmission | % | 90 | 89,99 | 89,99 | 90 | - |
| Y.I. | | 1,17 | 0,96 | 0,44 | 0,9 | - |

| **opt.Daten 320°C/80°C** | | | | | | |
|---|---|---|---|---|---|---|
| Transmission | % | 89,98 | 90,03 | 89,96 | 89,9 | - |
| Y.I. | | 1,28 | 0,98 | 1,02 | 1,0 | - |

| **opt.Daten 320°C/80°C 5-fache VWZ** | | | | | | |
|---|---|---|---|---|---|---|
| Transmission | % | 89,94 | 90,01 | 89,92 | 89,9 | - |
| Y.I. | | 1,37 | 1,1 | 1,05 | 1,1 | - |

| **opt.Daten 340°C/80°C** | | | | | | |
|---|---|---|---|---|---|---|
| Transmission | % | 89,84 | 89,93 | 89,79 | 89,8 | - |
| Y.I. | | 1,72 | 1,25 | 1,18 | 1,1 | - |

| **opt.Daten 340°C/80°C 5-fache VWZ** | | | | | | |
|---|---|---|---|---|---|---|
| Transmission | % | 89,83 | 89,89 | 89,7 | 89,7 | - |
| Y.I. | | 1,69 | 1,48 | 1,53 | 1,3 | - |

Wie sich aus Tabelle 1 deutlich ergibt, weisen die erfindungsgemäßen Zusammensetzung eine deutlich bessere Thermostabilität gegenüber unsubstituierten Polycarbonatzusammensetzungen auf. Der Y.I. fällt signifikant, während Transmission und Schmelzflußverhalten praktisch unverändert bleiben, wobei dieser Effekt bei hohen Verarbeitungstemperaturen und langen Verweilzeiten besonders ausgeprägt ist.

Bei den Versuchen in Tabelle 2 wurde gezeigt, dass die direkte Einarbeitung der erfindungsgemäßen Phosphorverbindungen bei der Herstellung der Polycarbonate essentiell ist (PC 5 und PC 6), während während das Nichtvorhandensein der Paare von Phosphorverbindungen der Oxidationsstufen +3 und +5 in der Polycarbonatuzsammensetzung zu einem deutlich höheren Y.I. und einer geringeren Transmission führt.

Das erfindungsgemäße PC 5 ist ein BPA-Polycarbonat mit einem MVR von 10,0 cm³/10 min (1,2 kg, 300°C gemäß ISO 1133)

Das erfindungsgemäße PC 6 ist ein BPA-Polycarbonat mit einem MVR von 13,2 cm³/10 min (1,2 kg, 300°C gemäß ISO 1133)

Das Vergleichsbeispiel PC 7 ist ein BPA-Polycarbonat mit einem MVR von 13,0 cm³/10 min (1,2 kg, 300°C gemäß ISO 1133)

**Tab. 2**

| | | PC5 erfindungsgemäß | PC6 erfindungsgemäß | PC 7 Vergleich 2 |
|---|---|---|---|---|
| | | | | |
| TPP Gehalt | ppm | 191 | | |
| TPPO Gehalt | ppm | 27 | | |
| | | | | |
| Irgafos 168 Gehalt | ppm | | 129 | |
| Irgafos 168 Oxid Gehalt | ppm | | 6 | |
| | | | | |
| Transmission @ 4mm | % | 89,74 | 89,79 | 89,36 |
| | | | | |
| YI | -- | 1,24 | 1,36 | 1,75 |

Man erkennt, dass die erfindungsgemäßen Polycarbonatzusammensetzungen PCS und PC 6 eine deutlich höhere Transmission bei gleichzeitig reduziertem Yellowness Index aufweisen.

Bei den Versuchen in Tabelle 3 wurde gezeigt, dass die direkte Einarbeitung der erfindungsgemäßen Phosphorverbindungen bei der Herstellung der Polycarbonate essentiell ist (PC 5), während eine nachträgliche Compoundierung der Phosphin/Phosphinoxidmischung Zusammensetzungen mit einem deutlich höheren Y.I. und einer geringeren Transmission ergibt.

Das erfindungsgemäße PC8 ist,ein BPA-Polycarbonat mit einem MVR von 12,5 cm³/10 min (1,2 kg, 300°C gemäß ISÖ 1133).

Das Vergleichsbeispiel PC 9 ist ein BPA-Polycarbonat mit einem MVR von 12,5 cm³/10 min (1,2 kg, 300°C gemäß ISO 1133), bei dem in einem Compoundierschritt 250 ppm TPP eingearbeitet wurden.

**Tab. 3**

| Ergebnisse | | PC 8 erfindungsgemäß | PC9 Vergleich 3 |
|---|---|---|---|
| | | | |
| TPP Gehalt | ppm | 190 | 41 |
| TPPO Gehalt | ppm | 27 | 84 |
| | | | |
| Transmission @ 4mm | % | 89,81 | 89,05 |
| | | | |
| YI | -- | 1,29 | 1,48 |

Man erkennt, dass die erfindungsgemäße Polycarbonatzusammensetzung PC 8 eine deutlich höhere Transmission bei gleichzeitig reduziertem Yellowness Index gegenüber dem nachträglich compoundierten PC 9 aufweist.

## Patentansprüche

1. Zusammensetzung, enthaltend ein Bisphenol-A haltiges Polycarbonat oder Copolycarbonat und mindestens ein Paar einer Phosphorverbindung mit der Oxidationszahl +3 und einer Phosphorverbindung mit der Oxidationszahl +5 gemäß einer der Formeln (1) - (6) 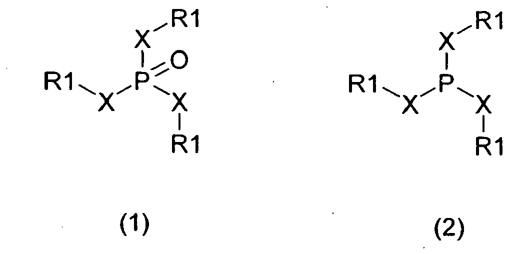 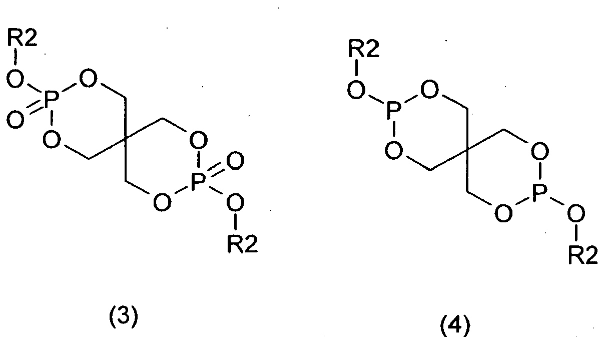 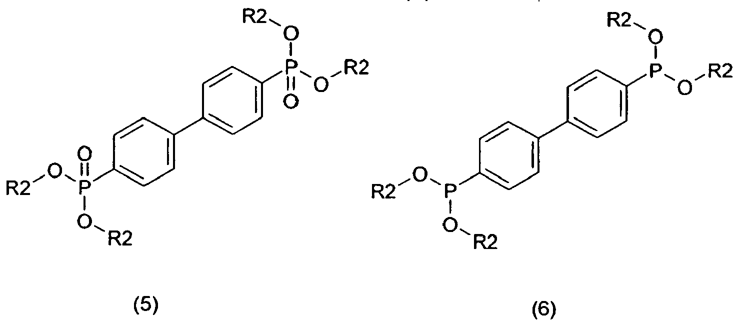 mit
X = einer chemischen Einfachbindung oder einem Sauerstoffatom, und
R1 und R2 unabhängig voneinander und untereinander einem Phenylrest oder einem substituierten Phenylrest, wobei in einem Paar jeweils die Phosphorverbindung mit der Oxidationszahl +5 der oxidierten Form der Phosphorverbindung der Oxidationszahl +3 entspricht und der Gehalt der höher oxidierten Verbindung geringer ist als der Verbindung mit der niedrigeren Oxidationszahl.

2. Zusammensetzung nach Anspruch 1, **dadurch gekennzeichnet, daß** das Verbindungspaar der Phosphorverbindungen ausgewählt ist aus den Verbindungen gemäß den Formeln (7) bis (28) 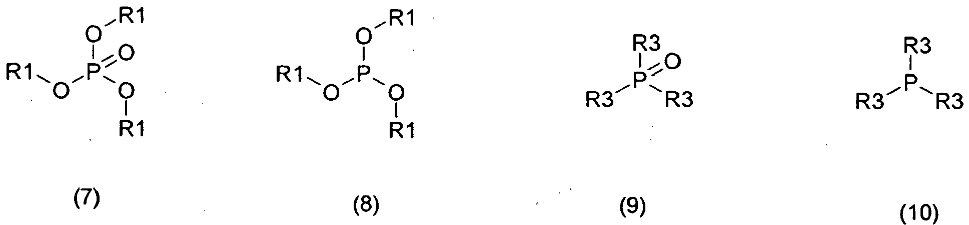 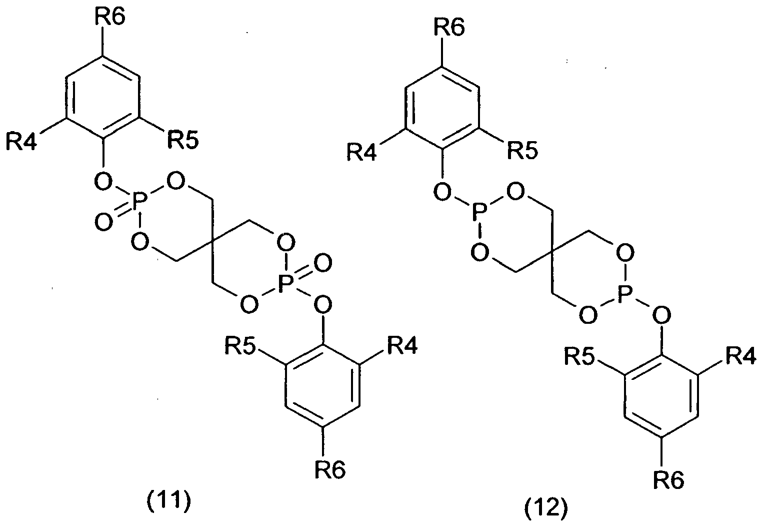 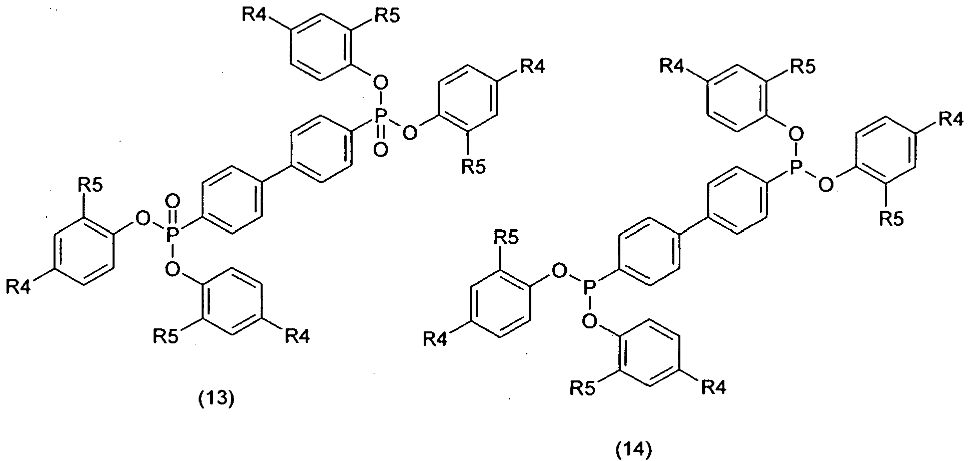 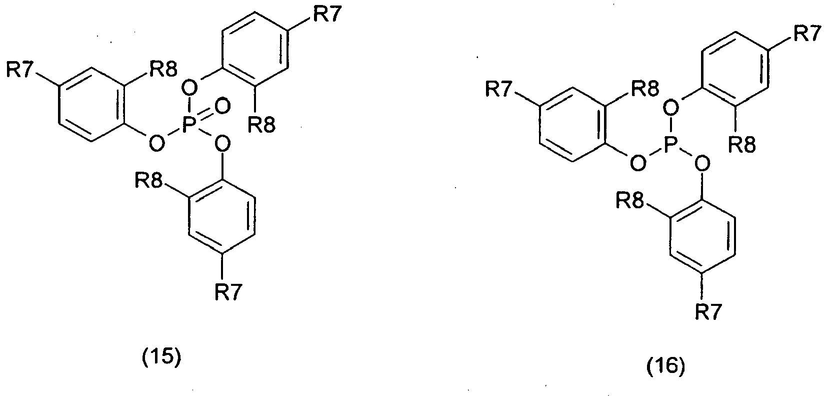 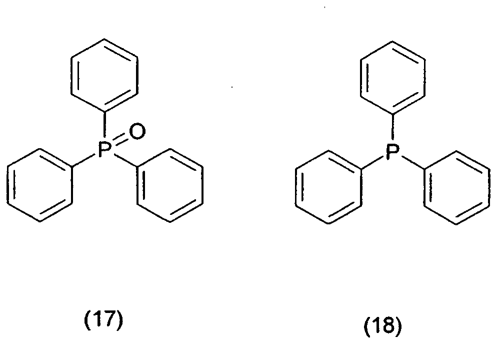 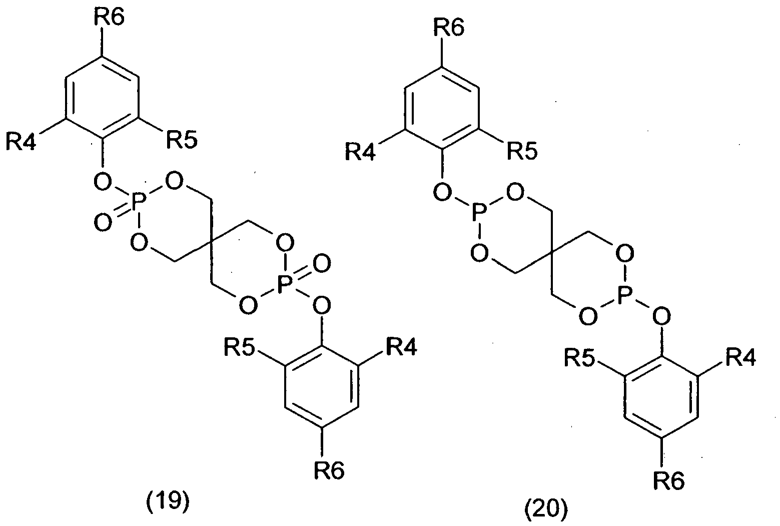 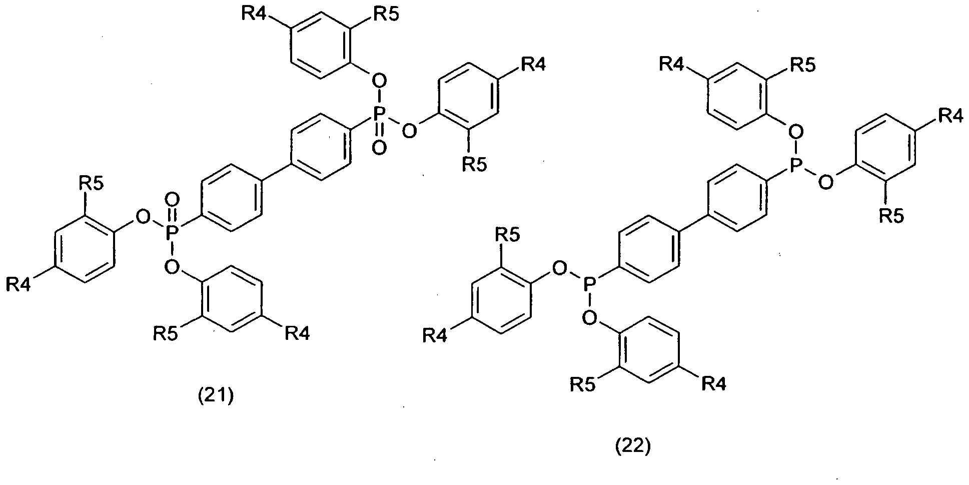 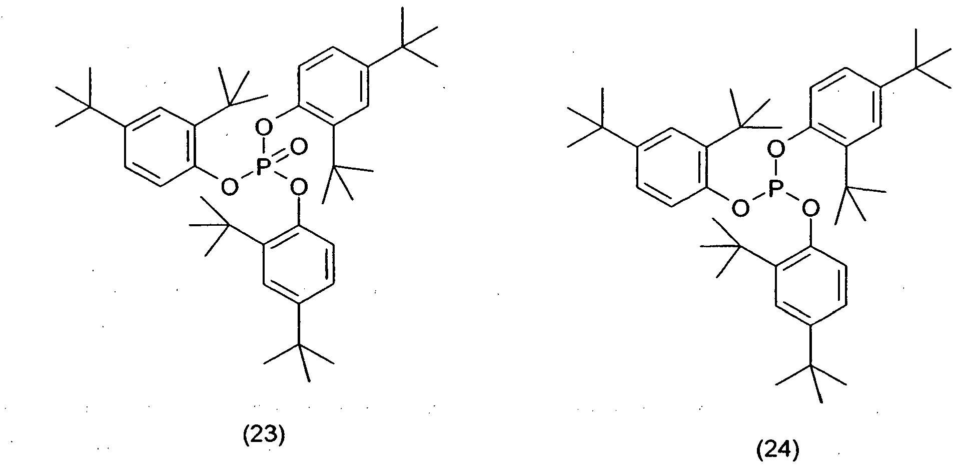 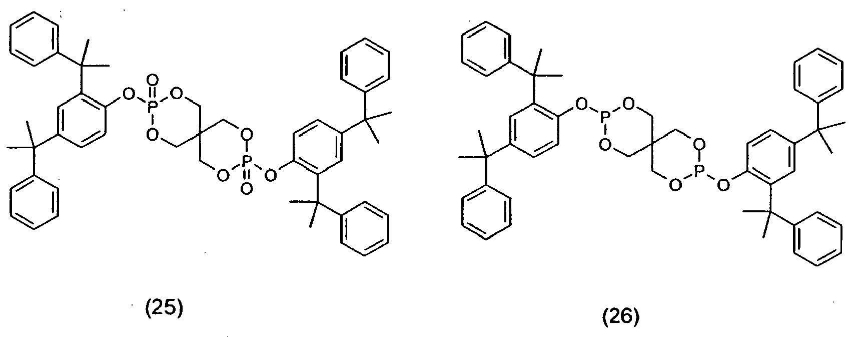 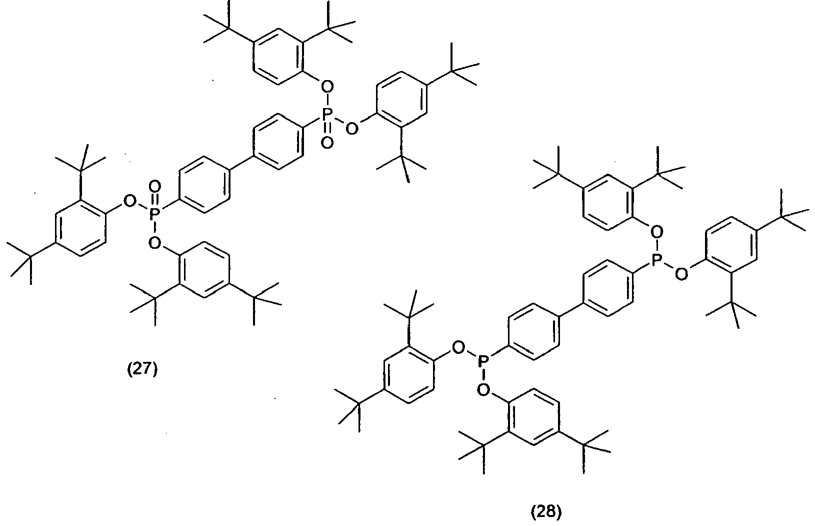 wobei R1 und R3 unabhängig von einander für einen Phenylrest oder einen substituierten Phenylrest stehen, und
wobei R4, R5, R6, R7 und R8 für H, verzweigtes C₁-C₈- Alkyl oder Cumyl, vorzugsweise tert-Butyl oder Cumyl stehen.

3. Zusammensetzung nach Anspruch 1 oder 2, **dadurch gekennzeichnet**, der Gehalt an Phosphorverbindungen der Oxidationsstufe +3 im Verbindungspaar in der Zusammensetzung 5 bis 1500 ppm beträgt.

4. Zusammensetzung nach Anspruch 1 oder 2, **dadurch gekennzeichnet, daß** der Gehalt an Phosphorverbindungen der Oxidationsstufe +3 im Verbindungspaar in der Zusammensetzung vorzugsweise 100 bis 325 ppm beträgt.

5. Zusammensetzung nach Anspruch 1 oder 2, **dadurch gekennzeichnet**, der Gehalt an Phosphorverbindungen der Oxidationsstufe +5 im Verbindungspaar in der Zusammensetzung 5 bis 300 ppm beträgt.

6. Zusammensetzung nach Anspruch 1 oder 2, **dadurch gekennzeichnet**, der Gehalt an Phosphorverbindungen der Oxidationsstufe +5 im Verbindungspaar in der Zusammensetzung 20 bis 60 ppm beträgt.

7. Zusammensetzung nach einem der vorhergehenden Ansprüche, **dadurch gekennzeichnet, daß** Phosphorverbindungen der Oxidationsstufe +5 im Verbindungspaar von 2% bis 49 %, bevorzugt 2% bis 45 %, besonders bevorzugt 3% bis 40% ganz besonders bevorzugt 4% bis 35 %, bezogen auf die Gesamtmasse der Verbindungen der Formeln (1) - (6) enthalten sind.

8. Zusammensetzung nach Anspruch 1 oder 2, **dadurch gekennzeichnet, dass** das Verhältnis von sekundären zu primären Antioxidantien zwischen zwischen 6:1 bis 1:6 beträgt.

9. Zusammensetzung nach Anspruch 1 oder 2, **dadurch gekennzeichnet, daß** sie mindestens ein Additiv enthält ausgewählt aus der Gruppe bestehend aus UV-Stabilisatoren, Entformungsmitteln und Farbmitteln.

10. Zusammensetzung nach Anspruch 9, **dadurch gekennzeichnet, dass** der UV-Absorber aus der Gruppe der Benzotriazole, der Triazine, der Cyanacrylate oder der Malonester ausgewählt ist.

11. Zusammensetzung nach Anspruch 1 oder 2, **dadurch gekennzeichnet, dass** das Polycarbonat ein Molekulargewichte M_{w} von 10.000 bis 200.000, vorzugsweise von 15.000 bis 100.000 und besonders bevorzugt von 17.000 - 70.000 g/mol aufweist.

12. Verfahren zur Herstellung einer Zusammensetzung nach Anspruch 1, umfassend die Schritte:
a) Herstellung einer Polycarbonatzusammensetzung aus einem in einem kontinuierlichen Verfahren nach dem Phasengrenzflächenverfahren oder Schmelzeverfahren gewonnen Basisharzes und Einbringen einer Phosphorverbindung mit einer Oxidationsstufe +3 der Formel (2), (4) oder (6) in einem kontinuierlichen Prozess über ein Seitenaggregat mit Erzeugung einer korrespondierenden Phosphorverbindung der Oxidationsstufe +5 der Formel (1), (3) oder (5) in einer in situ Reaktion innerhalb des Produktionsaggregats, gegebenenfalls unter Luftausschluss.

13. Zusammensetzung nach Anspruch 1 oder 2 zur Verwendung bei der Herstellung von Blends und Compounds.

14. Verfahren nach Anspruch 12, **dadurch gekennzeichnet, daß** es weiterhin die folgenden Schritte umfaßt:
b) Bestimmung des Gehalts an Phosphorverbindungen der Oxidationsstufen +3 und +5 nach den Formeln (1)-(6),
c) optionale Zugabe von zusätzlichen Phosphorverbindungen der Oxidationsstufe +3 zur Polycarbonatschmelze.

15. Extrudate und Formkörper enthaltend Zusammensetzungen nach Anspruch 1.

## Claims

1. Composition comprising a bisphenol-A-containing polycarbonate or copolycarbonate and at least one pair of a phosphorus compound of oxidation state +3 and of a phosphorus compound of oxidation state +5 according to any of the formulae (1)-(6) 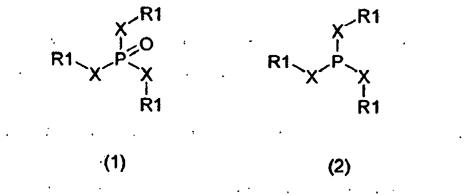 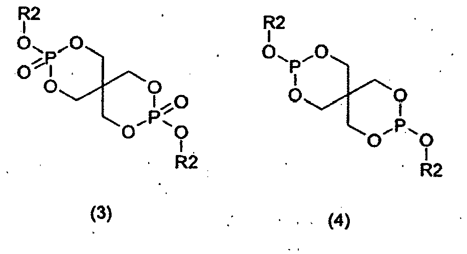 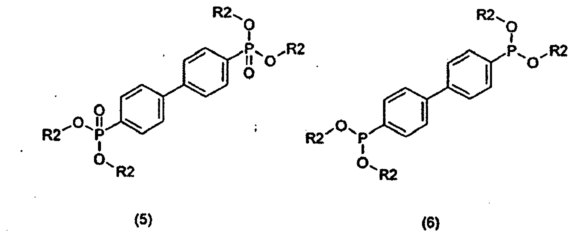 where
X = a single chemical bond or an oxygen atom, and
R1 and R2 are mutually independently a phenyl moiety or a substituted phenyl moiety, where within a pair in each case the phosphorus compound of oxidation state +5 corresponds to the oxidized form of the phosphorus compound of oxidation state +3, and the content of the higher-oxidation-state compound is smaller than that of the compound of the lower oxidation state.

2. Composition according to Claim 1, **characterized in that** the pair of phosphorus compounds is one selected from the compounds according to the formulae (7) to (28) 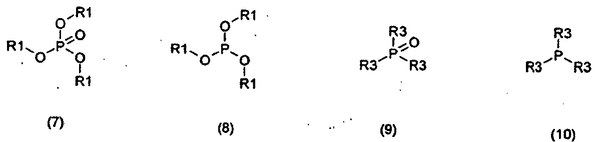 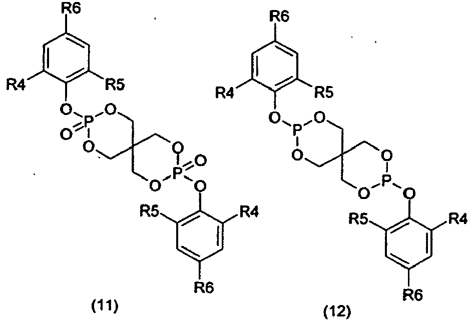 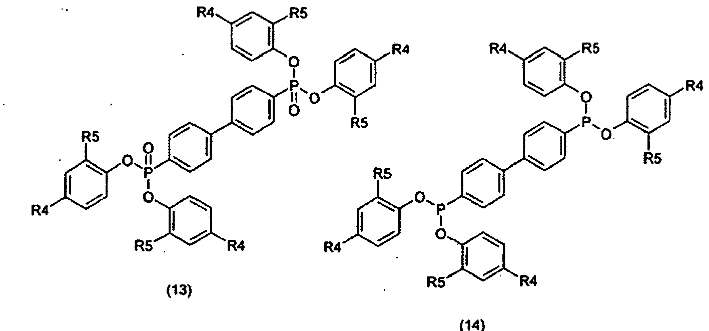 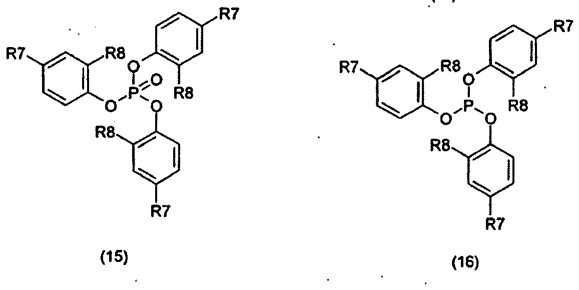 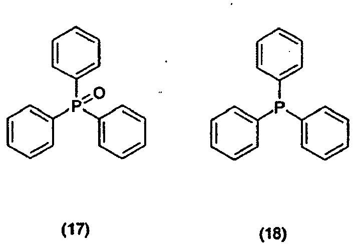 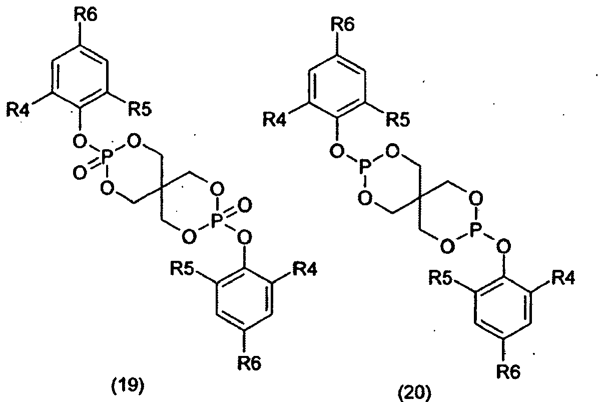 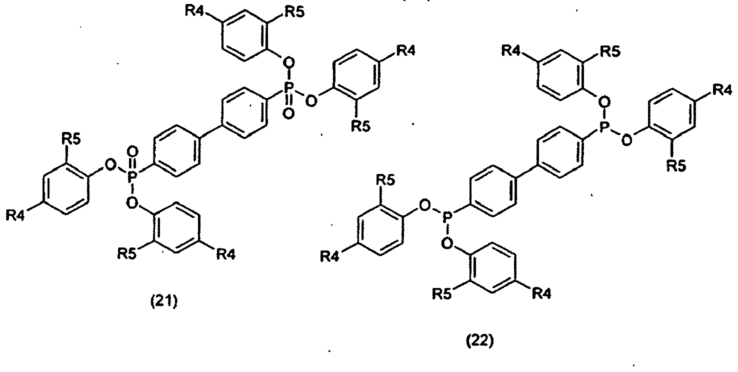 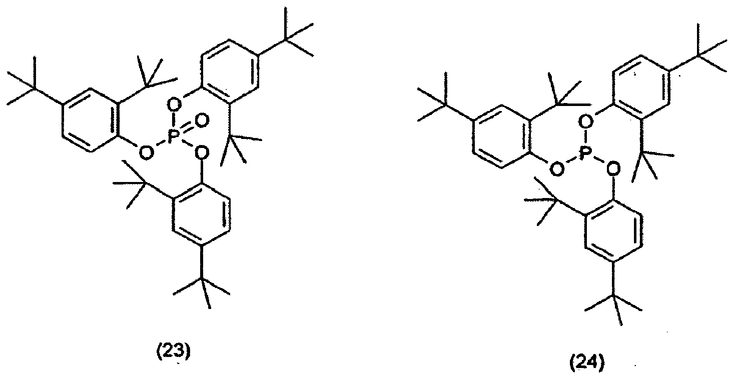 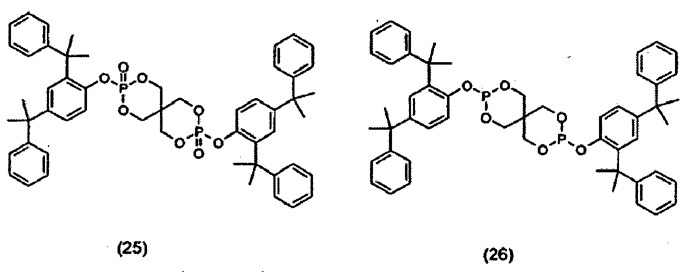 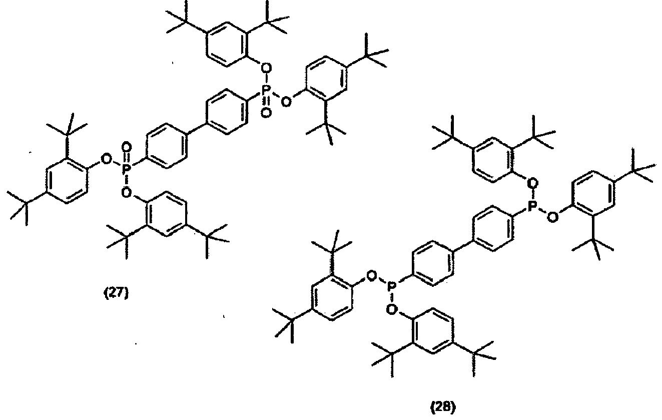 where R1 and R3 are mutually independently a phenyl moiety or a substituted phenyl moiety, and where R4, R5, R6, R7 and R8 are H, branched C₁-C₈-alkyl or cumyl, preferably tert-butyl or cumyl.

3. Composition according to Claim 1 or 2, **characterized in that** the content of phosphorus compounds of oxidation state +3 in the pair of compounds in the composition is from 5 to 1500 ppm.

4. Composition according to Claim 1 or 2, **characterized in that** the content of phosphorus compounds of oxidation state +3 in the pair of compounds in the composition is preferably from 100 to 325 ppm.

5. Composition according to Claim 1 or 2, **characterized in that** the content of phosphorus compounds of oxidation state +5 in the pair of compounds in the composition is from 5 to 300 ppm.

6. Composition according to Claim 1 or 2, **characterized in that** the content of phosphorus compounds of oxidation state +5 in the pair of compounds in the composition is from 20 to 60 ppm.

7. Composition according to any of the preceding claims, **characterized in that** the amounts present of phosphorus compounds of oxidation state +5 in the pair of compounds is from 2% to 49%, preferably from 2% to 45%, particularly preferably from 3% to 40% and very particularly preferably from 4% to 35%, based on the total mass of the compounds of the formulae (1)-(6).

8. Composition according to Claim 1 or 2, **characterized in that** the ratio of secondary to primary antioxidants is from 6:1 to 1:6.

9. Composition according to Claim 1 or 2, **characterized in that** it comprises at least one additive selected from the group consisting of UV stabilizers, mould-release agents and colorants.

10. Composition according to Claim 9,**characterized in that** the UV absorber is one selected from the group of the benzotriazoles, the triazines, the cyanoacrylates or the malonic esters.

11. Composition according to Claim 1 or 2, **characterized in that** the molar mass M_{w} of the polycarbonate is from 10 000 to 200 000 g/mol, preferably from 15 000 to 100 000 g/mol and particularly preferably from 17 000 to 70 000 g/mol.

12. Process for the production of a composition according to Claim 1, comprising the following steps:
a) production of a polycarbonate composition derived from a parent resin obtained in a continuous process by the interfacial process or melt process, and introduction of a phosphorus compound of oxidation state +3 of the formula (2), (4) or (6) in a continuous process by way of an ancillary assembly with production of a corresponding phosphorus compound of oxidation state +5 of the formula (1), (3) or (5) in an in-situ reaction within the production assembly, optionally with the exclusion of air.

13. Composition according to Claim 1 or 2 for use in the production of blends and compounded materials.

14. Process according to Claim 12, **characterized in that** it also comprises the following steps:
b) determination of the content of phosphorus compounds of oxidation states +3 and +5 according to the formulae (1)-(6),
c) optional addition of additional phosphorus compounds of oxidation state +3 to the polycarbonate melt.

15. Extrudates and mouldings comprising compositions according to Claim 1.

## Revendications

1. Composition, contenant un polycarbonate ou copolycarbonate, contenant du bisphénol A, et au moins une paire d'un composé du phosphore ayant le nombre d'oxydation +3 et d'un composé du phosphore ayant le nombre d'oxydation +5 selon l'une des formules (1) - (6) 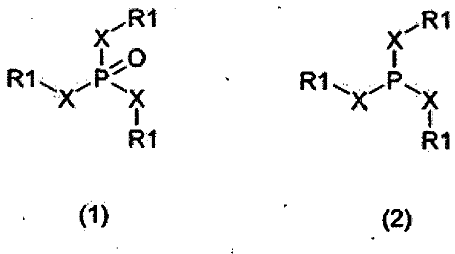 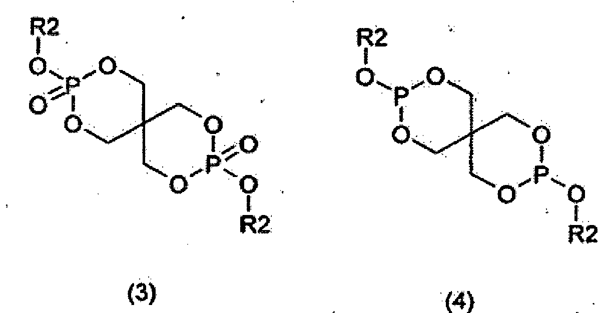 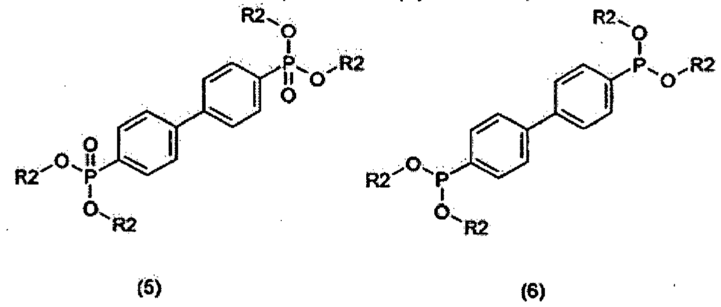 où
X = une liaison chimique simple ou un atome d'oxygène, et
R1 et R2 représentent indépendamment l'un de l'autre et entre eux-mêmes un radical phényle ou un radical phényle substitué, dans une paire le composé du phosphore ayant le nombre d'oxydation +5 correspondant chaque fois à la forme oxydée du composé du phosphore au nombre d'oxydation +3 et la teneur en le composé plus hautement oxydé étant inférieure à la teneur en le composé ayant le plus faible nombre d'oxydation.

2. Composition selon la revendication 1, **caractérisée en ce que** la paire de composés des composés du phosphore est choisie parmi les composés selon les formules (7) à (28) 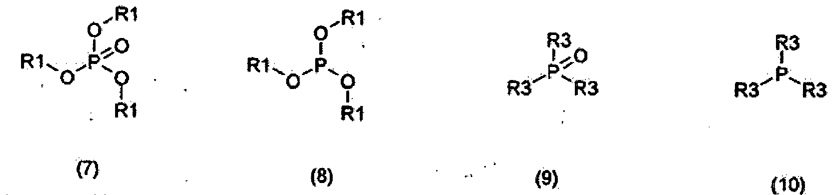 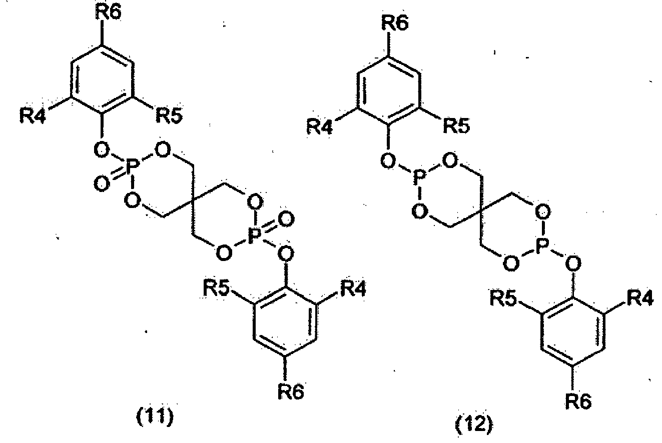 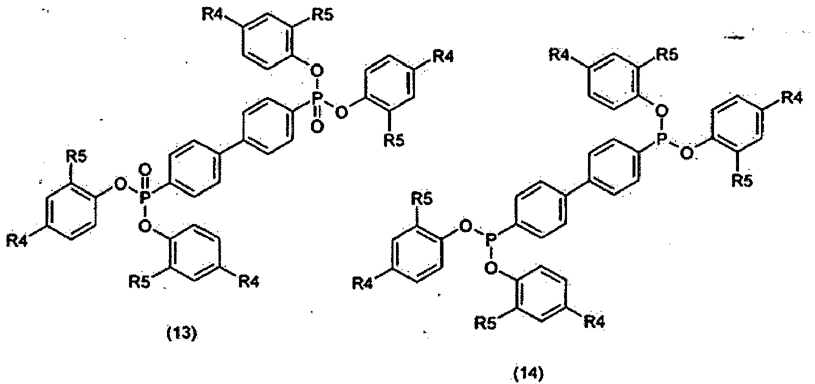 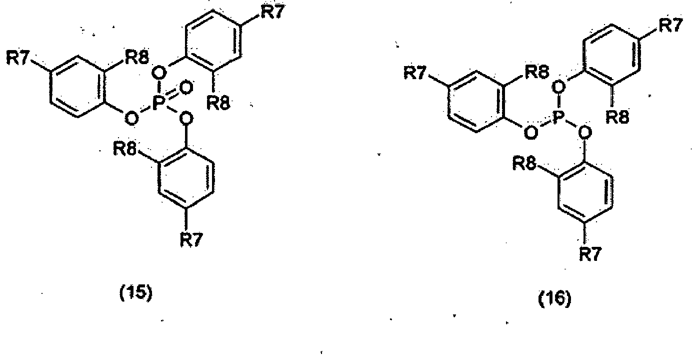 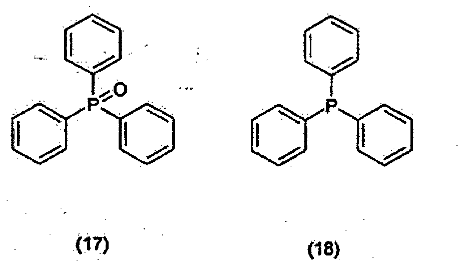 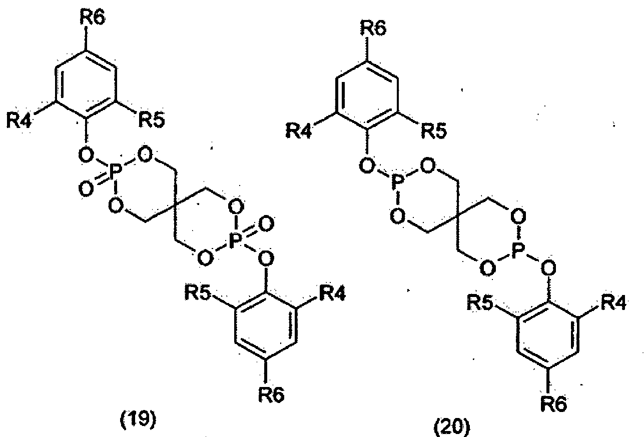 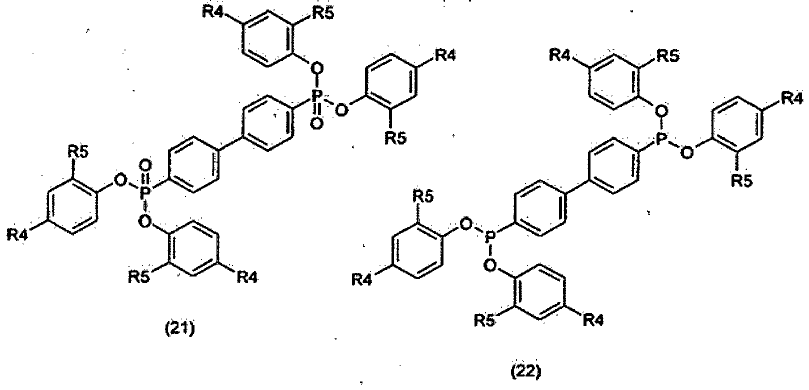 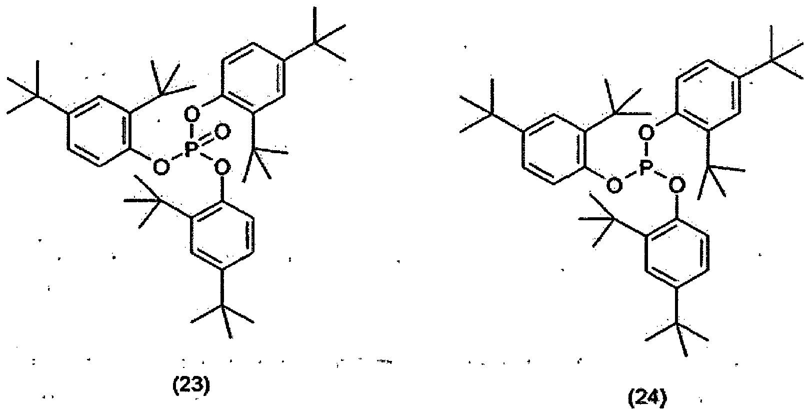 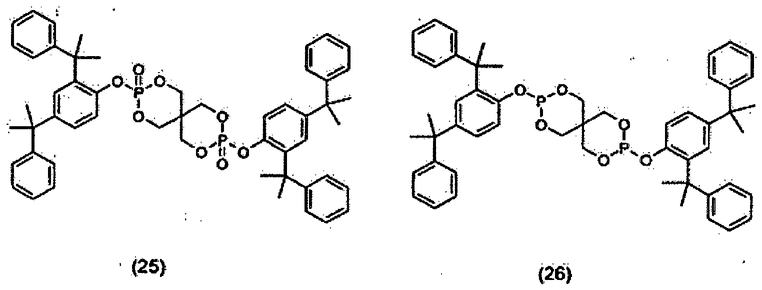 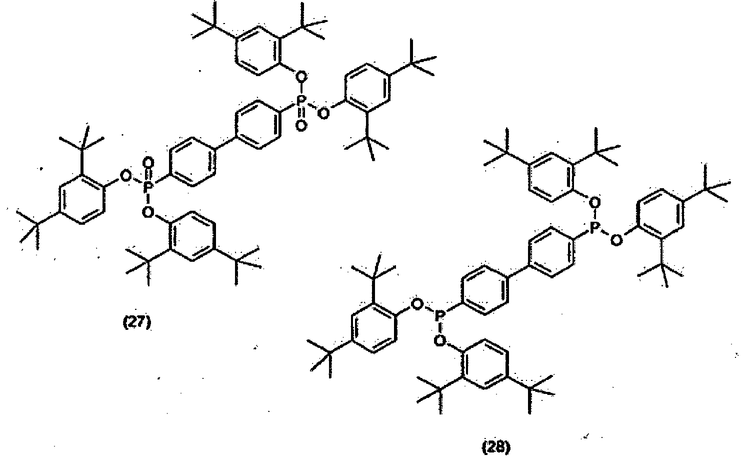 R1 et R3 représentant indépendamment l'un de l'autre un radical phényle ou un radical phényle substitué, et
R4, R5, R6, R7 et R8 représentent H, un groupe alkyle en C₁-C₈ ou cumyle, de préférence le radical tert-butyle ou cumyle.

3. Composition selon la revendication 1 ou 2, **caractérisée en ce que** la teneur en composés du phosphore au degré d'oxydation +3 dans la paire de composés dans la composition vaut de 5 à 1 500 ppm.

4. Composition selon la revendication 1 ou 2, **caractérisée en ce que** la teneur en composés du phosphore au degré d'oxydation +3 dans la paire de composés dans la composition vaut de préférence de 100 à 325 ppm.

5. Composition selon la revendication 1 ou 2, **caractérisée en ce que** la teneur en composés du phosphore au degré d'oxydation +5 dans la paire de composés dans la composition vaut de 5 à 300 ppm.

6. Composition selon la revendication 1 ou 2, **caractérisée en ce que** la teneur en composés du phosphore au degré d'oxydation +5 dans la paire de composés dans la composition vaut de 20 à 60 ppm.

7. Composition selon l'une quelconque des revendications précédentes, **caractérisée en ce que** les composés du phosphore au degré d'oxydation +5 sont contenus dans la paire de composés à raison de 2 % à 49 %, de préférence de 2 % à 45 %, de façon particulièrement préférée de 3 % à 40 %, de façon tout particulièrement préférée de 4 % à 35 %, par rapport à la masse totale des composés de formules (1) - (6).

8. Composition selon la revendication 1 ou 2, **caractérisée en ce que** le rapport des antioxydants secondaires aux antioxydants primaires est compris entre 6:1 à 1:6.

9. Composition selon la revendication 1 ou 2, **caractérisée en ce qu'**elle contient au moins un additif choisi dans le groupe constitué par des stabilisants UV, des agents de démoulage et des agents colorants.

10. Composition selon la revendication 9, **caractérisée en ce que** l'absorbeur UV est choisi dans le groupe des benzotriazoles, des triazines, des cyanoacrylates ou des esters maloniques.

11. Composition selon la revendication 1 ou 2, **caractérisée en ce que** le polycarbonate présente une masse moléculaire M_{w} de 10 000 à 200 000, de préférence de 15 000 à 100 000 et de façon particulièrement préférée de 17 000 - 70 000 g/mole.

12. Procédé pour la préparation d'une composition selon la revendication 1, comprenant les étapes :
a) Préparation d'une composition de polycarbonate à partir d'une résine de base obtenue dans un processus en continu selon le procédé en interface ou le procédé en masse fondue, et introduction d'un composé du phosphore ayant un degré d'oxydation +3 de formule (2), (4) ou (6) dans un processus en continu via un appareil latéral, avec production d'un composé du phosphore correspondant, au degré d'oxydation +5, de formule (1), (3) ou (5) dans une réaction in situ à l'intérieur de l'appareil de production, éventuellement à l'abri de l'air.

13. Composition selon la revendication 1 ou 2, pour utilisation dans la production d'alliages et de compounds.

14. Procédé selon la revendication 12, **caractérisé en ce qu'**il comprend en outre les étapes suivantes:
b) détermination de la teneur en composés du phosphore aux degrés d'oxydation +3 et +5 selon les formules (1) - (6) ;
c) addition optionnelle de composés du phosphore supplémentaires au degré d'oxydation +3 à la masse fondue de polycarbonate.

15. Extrudats et corps moulés contenant des compositions selon la revendication 1.
